# EUROPEAN PATENT SPECIFICATION

(11) **EP 0 521 440 B1**
(45) Date of publication and mention of the grant of the patent: **12.02.1997**
(21) Application number: 92111015.1
(22) Date of filing: 29.06.1992
(51) Int. Cl.: B25J 9/16

(54) **A manual teaching control device for operations in an industrial robots-system**
Manuelle Lernkontrollvorrichtung für Arbeitsvorgänge in einem Industrierobotersystem
Dispositif de contrôle manuel d'enseignement d'un système robotique industriel

(30) Priority: 05.07.1991 JP 192493/91
(43) Date of publication of application: 07.01.1993
(73) Proprietor: Daihen Corporation, Osaka 532 (JP)
(72) Inventor: Kasagami, Fumio, Ikoma, Nara (JP); Kugumiya, Seisuke, Kitsuki, Oita (JP)
(74) Representative: KUHNEN, WACKER & PARTNER

(56) References cited:
- EP-A- 0 177 142
- WO-A-91/04522
- GB-A- 2 208 553
- US-A- 5 020 001

## Description

The present invention relates to a teaching control device for manual operations of an industrial-robotic system, including a workpiece handling robot that is capable to change "position and attitude" of a workpiece, and a tool handling robot that is capable to change "position and attitude" of a tool processing said workpiece.

### BACKGROUND OF THE PRIOR ART

The industrial-robots composed of a workpiece handling robot and a tool handling robot provided with a tool, such as a machining tool, a welding torch or a welding gun etc., are generally controlled with co-operation by means of method of teaching playback so as to replay movement of both robots at the same time in real processing operations.

Teaching operations for the robot have to be performed before real processing operations. Teach working for both robots are subjected to sole-acting manual operation respectively.

Document WO-A-91/04522 defining the closest prior art relates to a manual teaching control device for operations in an industrial robot-system having a tool moved from a first workpiece point of a path to a following point to be taught while a upper cell component follows the movement of the tool in such a way that the orientation of the robot tool remains constant with respect to the workpiece. Afterwards, the workpiece manipulator is moved from the position of the first point towards the following point. Hence, the movement of one cell component is calculated on the basis of the movement of the other cell component (tool of the robot) so that errors during the calculation of the position of the tool robot result in accumulated errors in the calculation for the other cell component. According to the invention, the movement path of both the tool and the workpiece table are calculated simultaneously and both components are moved synchroneously step by step from the first teaching point to the following teaching point.

Document US-A-5,020,001 relates to a robot controller for having a workpiece held by a robot and having the workpiece machined by moving it relative to a stationary tool. This known robot controller differs from the invention already in the generic term. The same applies to the GB-A-2 208 553 disclosing a communication adapter for an automated factory system.

Document EP-A-0 177 142 relates to a method and an apparatus for controlling a manipulator and a workpiec positioner. This document lacks any hint at a teaching control device for controlling the movement of the manipulator and the workpiece during the teaching operation.

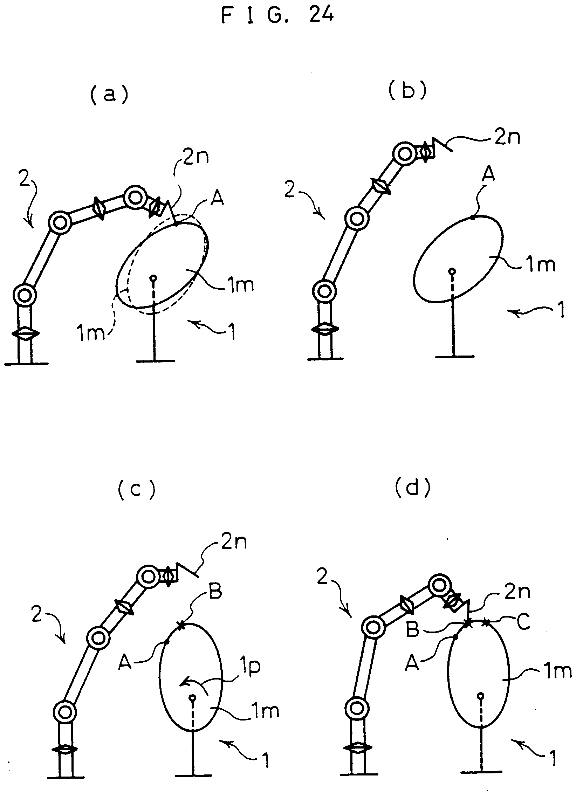

Referring to Fig. 24(a) of the prior art, first, desired positioning for each robot are independently achieved by means of separating movement of workpiece 1m on the workpiece handling robot 1 from movement of tool 2n on the tool handling robot 2. The point of A in the "position and attitude", which are established by the above-mentioned independent movement, is taught as a teaching point of the first positioning. This means that the data of "position and attitude" of tool 2n against workpiece 1m at the point A and the data of "joint variables" of workpiece handling robot 1 are memorized in a computer.

Thereafter, tool 2n and workpiece 1m have to be moved according to commands of an operator in order to obtain the second positioning. When the workpiece 1m is moved by means of movement of workpiece handling robot only as shown by a broken line after teaching point A of the first positioning, the workpiece 1m often contacts with or collides the tool 2n. Therefore, it is necessary to avoid the interference of workpiece 1m with tool 2n each other.

An operator needs to command once retiring tool 2n from workpiece 1m as shown in Fig, 24(b), after teaching point A at the first positioning.

Next, the workpiece 1m is moved to the direction of an arrow 1p by means of movement of workpiece handling robot 1 as shown in Fig, 24(c) in order to obtain a desired position for a next teaching point B. As shown in Fig. 24(d), the point B is taught at the second positioning which is established by means of returning tool 2n to workpiece 1m according to movement of tool handling robot 2.

It is very inconvenient to retire the tool from the workpiece in the middle of teaching operations as mentioned above. Especially, teaching many points forces increase of the number of times for retiring the tool from the workpiece. As a result, it takes a lot of time in order to retire the tool and to return it, causing a problem that the teaching time is, on the whole, prolonged.

Futhermore, an operator often loses sight of a desired next teaching point on the workpiece, when the distance between a teaching point and a next one is short or when an arrangement of a series of teaching points is complicated.

The first objects of this invention is to enable subjecting tool on tool handing robot to movement of workpiece on workpiece handling robot by means of co-acting each other, when an operator teaches both of robots by manual operations.

The second object is to realize exactly maintaining previous position and attitude of tool against workpiece without retiring tool from workpiece one by one during teaching operations.

The third object is to present a teaching control device for simplified manual teaching operations in an industrial robots-system which teaching operations can be rapidly performed by means of accurately subjecting tool to movement of workpiece.

### SUMMARY OF THE INVENTION

The present invention is relates to an industrial robots-system taught by means of manual teaching operations, which is provided with a workpiece handling robot that is capable to change "position and attitude" of a workpiece and a tool handling robot that is capable to change "position and attitude" of a tool for processing said workpiece, and composing;
a selecting means for sole-action/co-action enables to select sole-acting manual operation that facilitates changing position and attitude of workpiece on workpiece handling robot and changing position and attitude of tool on tool handling robot separately, or to select co-acting manual operation that facilitates changing position and attitude of tool on tool handling robot by means of co-acting with changing position and attitude of workpiece on workpiece handling robot so that position and attitude of the tool against workpiece can be always kept constant.
a teaching key means outputs actuating signals for changing position and attitude of workpiece.
a control means for manual teaching operations carries out control according to process mentioned after by means of receiving actuating signals from said teaching key means and a co-acting signal from said selecting means for sole-action/co-action, and
said control means for manual teaching operations is a computer carries out controlling function, including;
the first process consists of picking up actuating signals, and computing position and attitude of workpiece handling robot at the starting time of manual teaching operations and position and attitude of tool against workpiece at the starting time of manual teaching operations,
the second process consists of commanding to carry out the third process by means of estimating the state after a preset infinitesimal time when actuating signals in the first process are maintained, and commanding to return to the first process when actuating signals have already changed into different ones, and commanding to terminate teaching operations when all of actuating signals have already vanished,
the third process consists of not only calculating position and attitude of workpiece handling robot but previously calculating position and attitude of tool handling robot by use of position and attitude of tool against workpiece at the starting time of manual teaching operations, which were calculated at the first process, and position and attitude of workpiece handling robot at the starting time of manual teaching operations, which were calculated at the first process,
the fourth process consists of not only calculating joint variables of workpiece handling robot by use of position and attitude of workpiece handling robot which were calculated at the third process but calculating joint variables of tool handling robot by use of position and attitude of tool handling robot which were calculated at the third process,
the fifth process consists of not only previously calculating actuating values for actuators of workpiece handling robot by use of joint variables of workpiece handling robot which were calculated at the fourth process but to previously calculating actuating values for actuators of tool handling robot by use of joint variables of tool handling robot which were calculated at the fourth process, in addition, including not only to synchronously output signals of actuating values for actuators of workpiece handling robot and signals of actuating values for actuators of tool handling robot just after an infinitesimal time, but to command repeating on and after the second process.

Said actuating signals of the teaching key means may be adopted the signals commanding translation along each axis or rotation around each axis in the cartesian coordinates of position and attitude of workpiece handling robot. And said actuating signals of the teaching key means may be also adopted the signals commanding motions of joints of workpiece handling robot.

According to the present invention, even if position and attitude of workpiece is changed in order to teach a next teaching point from one teaching point, the movement of tool handling robot can be acculately subjected to that of workpiece handling robot by means of co-acting each other so that position and attitude of tool against workpiece at the starting time of manual teaching operations can be always kept constant. As a result, it becomes unnecessary to retire the tool from the workpiece in order to avoid interference each other, when the workpiece is moved to desired positions. An operator is able to catch the last teaching point even when a next point is taught in the state that position and attitude of workpiece have already been changed, therefore, enabling rapid and exact teaching of other next points.

### BRIEF DESCRIPTION OF DRAWINGS

Fig. 1 is a schematic drawing of a teaching control device and a teach pendant in an industrial robots-system composing a workpiece handling robot and a tool handling robot.

Fig. 2 is a schematic drawing of a workpiece handling robot of 6 degrees of freedom which holds a workpiece in an end effector.

Fig. 3 is a schematic drawing of a tool handling robot of 6 degrees of freedom which installs a tool in an end effector.

Fig. 4 is a schematic drawing of an operation panel of a teach pendant provided with some kind of changing switches.

Fig. 5 is a schematic drawing for explanations of homogeneous transformation matrixes which show relations of position and attitude between each coordinates for the workpiece handling robot and each coordinates for the tool handling robot.

Fig. 6 is a block diagram of a control means for manual teaching operations which relates to actuators of each robot.

Fig. 7 is a flow chart which explains controlling function at the initial phase.

Fig. 8 is a flow chart which explains the motion of "co-acting".

Fig. 9 is a flow chart which explains the "mode of co-acting cartesian coordinates manual operation" continued from B of Fig. 8.

Fig. 10 is a flow chart which explains the "mode of co-acting cartesian coordinates manual operation" continued from D of Fig. 9.

Fig. 11 consists of (a) to (c) which are schematic drawings for explanations of the teaching path under the motion of "co-action" when a teaching point A is moved.

Fig. 12 is a timing chart of each process till all of keys are released.

Fig. 13 is a schematic drawings for explanations under the motion of "co-action of position and attitude" of the workpiece handling robot and the tool handling robot, where (a) shows a state at the first positioning, (b) shows a state at the positioning after the tool was subjected to a movement of the workpiece, and (c) shows a state that a next point is being taught.

Fig. 14 is a flow chart which explains the "mode of co-acting each axis manual operation" continued from F of Fig. 8.

Fig. 15 is a flow chart which explains the "mode of co-acting each axis manual operation" continued from G of Fig. 14.

Fig. 16 is a flow chart which explains the "mode of co-acting each axis manual operation" continued from H of Fig. 15.

Fig. 17 is a flow chart which explains the "mode of sole-acting each axis manual operation" continued from J of Fig. 7.

Fig. 18 is a flow chart which explains the "mode of sole-acting each axis manual operation" continued from K of Fig. 17.

Fig. 19 is a flow chart which explains the "mode of sole-acting each axis manual operation" continued from L of Fig. 17.

Fig. 20 is a flow chart which explains the "mode of sole-acting cartesian coordinates manual operation" continued from M of Fig. 7.

Fig. 21 is a flow chart which explains the "mode of sole-acting cartesian coordinates manual operation" continued from N of Fig. 20.

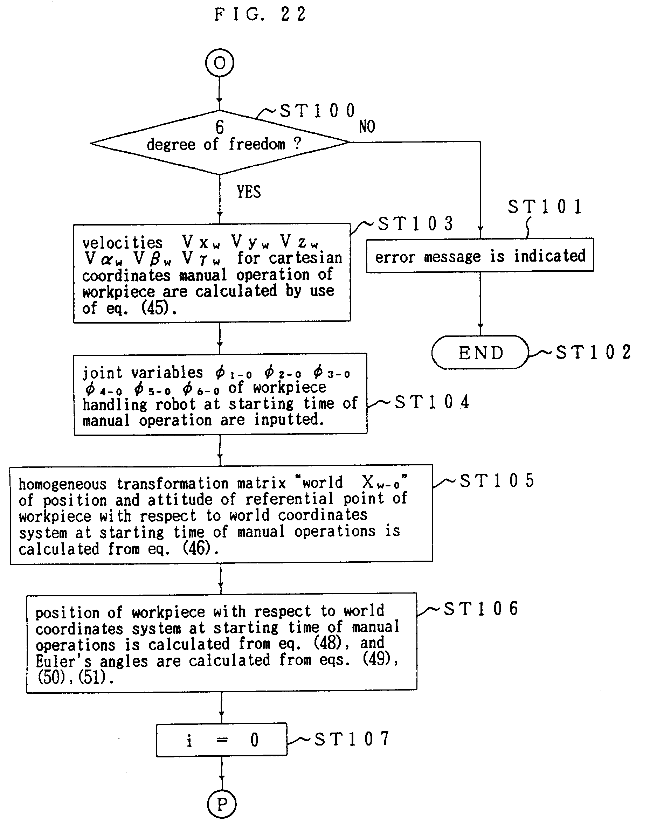

Fig. 22 is a flow chart which explains the "mode of sole-acting cartesian coordinates manual operation" continued from O of Fig. 20.

Fig. 23 is a flow chart which explains the "mode of sole-acting cartesian coordinates manual operation" continued from P of Fig. 22.

Fig. 24 is schematic drawings for explanations of the co-operation in the prior art which does not associate workpiece handling robot with tool handling robot, i.e., of "sole-action", where (a) shows a state at the first positioning, (b) shows a state that tool is retired from workpiece, (c) shows a state that workpiece is being moved to a next teaching point, and (d) shows a state that tool is taught a next point on workpiece.

### BEST MODE FOR PRACTICING THE INVENTION

A teaching control device for manual operation in an industrial robots-system of the present invention is disclosed as follows, by applying it to an embodiment of the welding robots-system which composed of a workpiece handling robot and a tool handling robot.

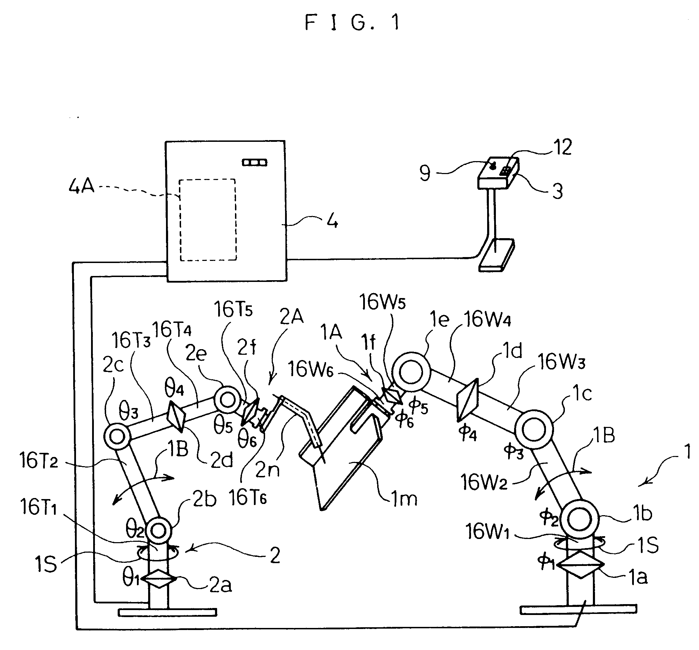

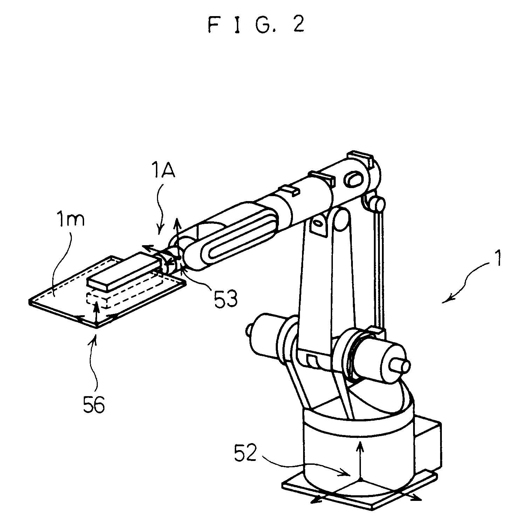

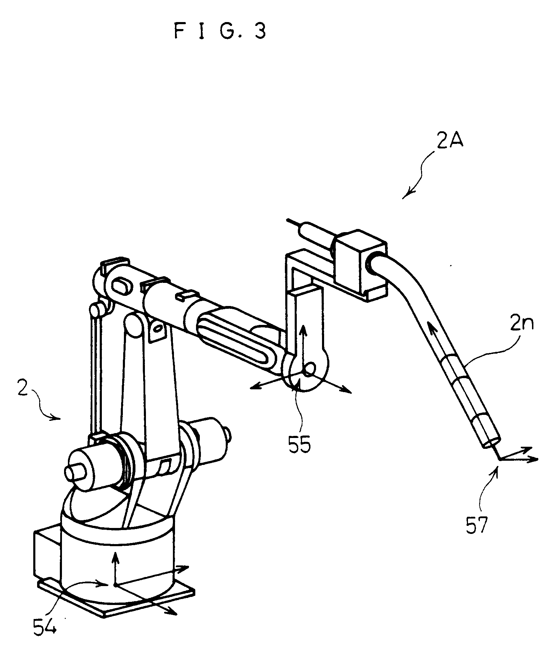

This robots-system is provided with a workpiece handling robot 1 which is capable to change "position and attitude" of a workpiece 1m as shown in Fig. 2 and a tool handling robot 2 which is capable to change "position and attitude" of a tool 2n for processing the workpiece as shown in Fig. 3. Both workpiece handling robot 1 and tool handling robot 2 are disposed to be faced each other as shown in Fig. 1, and position and attitude of workpiece 1m and position and attitude of tool 2n required in real processing operations, e.g., in the welding operations, can be manually taught before the real processing operations.

The workpiece handling robot 1 which moves a workpiece 1m held in an end effector 1A such as a robot hand is a manipulator of 6 degrees of freedom which has "joint variables" φ₁ to φ₆ corresponding to, for example, 6 joints 1a to 1f respectively. Similarly, the tool handling robot 2 which moves a tool 2n installed in an end effector 2A is also a manipulator of 6 degrees of freedom which has "joint variables" θ₁ to θ₆ corresponding to 6 joints 2a to 2f respectively. Each of joints 1a, 2a etc. indicated by diamond marks means a swivel-joints which rotates each of links 16W₁, 16T₁ to the direction of an arrow 1S, and each of joints 1b, 2b etc. indicated by double-circles means a bend-joint which bends each of links 16W₂, 16T₂ to the direction of an arrow 1B. When some of joints are actuated at the same time, the workpiece and the tool can be moved to desired directions respectively, i.e., being moved to the direction of, for instance, X-axis only and being rotated around Y-axis only.

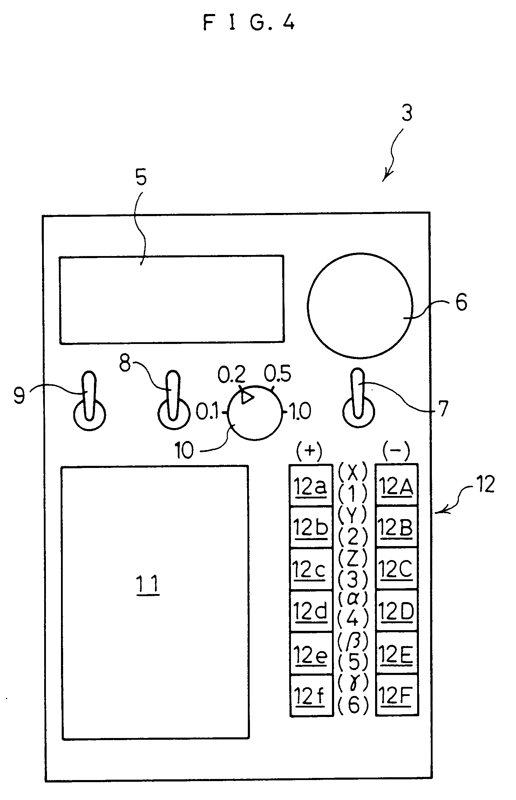

A teach pendant 3 and a control equipment 4 are provided in order to operate workpiece handling robot 1 and tool handling robot 2. Fig. 4 shows an operation panel of the teach pendant 3, on which an indicating device 5 and a stopping switch 6 are disposed. There is a robot changing switch 7 on the right hand side of the middle stage of the operation panel for selecting a robot which should be subjected to teaching operations, e.g., tiling it up means preparation of movement of workpiece handling robot 1 and tilting it down means preparation of movement of tool handling robot 2.

In the center of an operation panel of the teach pendant is provided a mode changing switch 8 in order to select "mode of each axis manual operation" or "mode of cartesian coordinates manual operation". An operation changing switch 9 is prepared on the left end of the operation panel, which is changed to select "sole-action" of each robot at teach working or "co-action" of both robots at teach working. This switch organizes "a selecting means for sole-action/co-action", which facilitates "manual operations of changing position and attitude of workpiece 1m on workpiece handling robot 1" and "manual operations of changing position and attitude of tool 2n on tool handling robot 2" separately, or facilitates "the manual operation of changing position and attitude of tool 2n on a tool handling robot 2" by means of associating with changing position and attitude of the workpiece 1m on a workpiece handling robot 1 so that position and attitude of the tool 2n against workpiece 1m can be always kept constant.

Therefore, the above-mentioned "co-action" of both robots at teaching operations means "the manual operation of changing position and attitude of tool 2n on a tool handling robot 2 so that position and attitude of the tool 2n against workpiece 1m are never changed while position and attitude of the workpiece 1m on a workpiece handling robot 1 are being changed" or "the manual operation of changing position and attitude of workpiece 1m on a workpiece handling robot 1 so that position and attitude of the workpiece 1m against tool 2n are never changed while position and attitude of the tool 2n on a tool handling robot 2 are being changed". But the former only is applied to an embodiment in the following description.

The portion of a scale in the center of the panel is a rate changing switch 10 which is used in order to select a desired rate for the movement of a workpiece 1m during the teach working so as to move it more slowly than a preset maximum value of a velocity table.

When a scale of, for example, 0.5 is selected, workpiece 1m can be moved at a half speed to the position which is taught by an operator. If the workpiece is required to move quickly, the scale of 1.0 is selected by an operator. Any rate may be selected during teaching operations. When the path from a present teaching point to a next one is rather long, the rate of, e.g., 1.0, is used till 80 % of said path and the rate of 0.1 is used during 20 % left thereof. As a result, workpiece 1m is quickly moved till the vicinity of the target, and it is slowly moved close by said target, by which it will be able to be accurately stopped at the target in a short time. Overshooting the target owing to selecting a higher rate, an operator has only to command returning to the target. It is convenient for a lower rate to relieve the tension of a teaching operator who tries to just stop the workpiece at the next teaching position. Therefore, the rates of this embodiment are provided with 4 of, e.g., 0.1, 0.2, 0.5, 1.0.

In the lower stage at the left hand side of the panel is provided an editing device 11 for teaching data. A group of keys 12 is disposed at the right hand side of the editing device. Each of keys 12a ∼ 12f, 12A ∼ 12F generates an output signal of "1", when it is pressed, and generates a signal of "0" when released. This group of keys 12 which consists of 12 push-buttons organizes a teaching key means which generates "actuating signals" for teaching operations.

Such a group of keys 12 is explained as follows; In the state that the mode changing switch 8 has been selected to "mode of each axis manual operation", when the keys 12a ∼ 12f at the left column are pressed, each of joints of workpiece handling robot 1 rotates respectively, and when the keys 12A ∼ 12F at the right column pressed, each of them reversely rotates respectively.

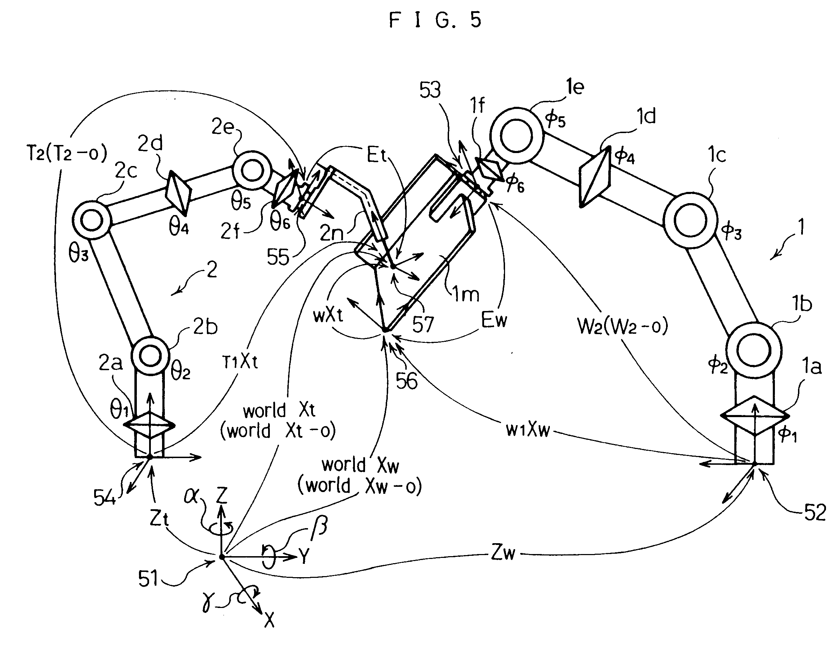

On the other hand, in the state that the mode changing switch 8 has been slected to "mode of cartesian coordinates manual operation", when the keys of the upper three are pressed, movements to the directions of X-axis, Y-axis, Z-axis of the world coordinates system 51 respectively as shown in Fig. 5 are performed, i.e., pressing the left keys 12a ∼ 12c realizes movement to the positive directions of each axis, and pressing the right ones 12A ∼ 12C realizes movement to the negative directions thereof. When the keys of the lower three are pressed, rotations to the directions of Euler's angles α, β, γ of the world coordinates system 51 respectively as shown in Fig. 5 are performed, i.e., pressing the left keys 12d ∼ 12f realizes rotation to the positive directions, and pressing the right ones 12D ∼ 12F realizes reverse rotation.

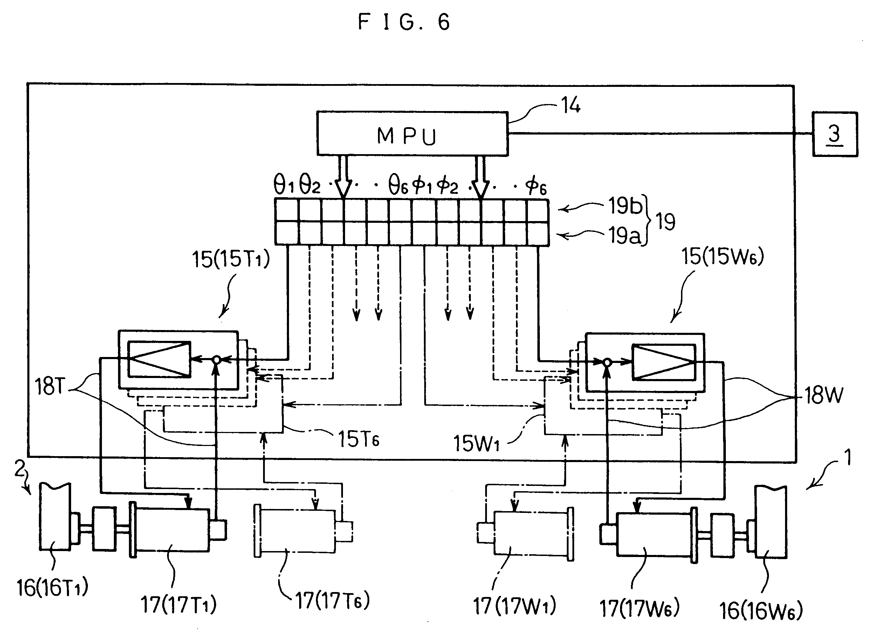

Such a teaching control device for manual operation in an industrial robots-system consists of a control equipment 4 which is provided with a computer 4A as a "control means for manual teaching operations", which carries out a control by means of receiving commands of "actuating signals" from group of keys 12 and commands of "co-acting signal" from the operation changing switch 9 as shown in Fig. 1. This "control means for manual teaching operations" 4A provides, as shown in Fig. 6, a micro-processing unit 14 which consists of CPU, ROM and RAM etc. and surbo-drivers 15 which transform output signals of the micro-processing unit into actuating signals for actuators explained as follows.

As workpiece handling robot 1 and tool handling robot 2 are manipulators of 6 degrees of freedom respectively, the surbo-drivers 15 consist of 12 ones of 15W₁ ∼ 15W₆ and 15T₁ ∼ 15T₆ and actuators 17 as electric motors consist of actuators 17W₁ ∼ 17W₆ and 17T₁ ∼ 17T₆ corresponding to each of surbo-drivers 15 so that they can rotate the links 16W₁ ∼ 16W₆ and 16T₁ ∼ 16T₆ connected with the joints of robot 1 and 2.

The symbol 18W in Fig. 6 is a control cable which connects each of surbo-drivers 15W with the corresponding actuator 17W of workpiece handling robot 1, and the symbol 18T is also a control cable which connects each of surbo-drivers 15T with the corresponding actuator 17T of tool handling robot 2. The numeral 19 is an interface which transmits signals of "actuating value for each actuator", i.e., the symbol 19a indicates an interface for outputting, and 19b indicates a buffer. They have 12 windows corresponding to "joint variables" φ₁ , φ₂ , · · · , φ₆ of workpiece handling robot 1 and corresponding to "joint variables" θ₁ , θ₂ , · · · , θ₆ of tool handling robot 2 respectively.

This "control means for manual teaching operations" 4A includes a control program which carries out five processes described as follows;

The first process is to calculate actuating velocities of workpiece handling robot 1 under the rate "r" selected on the rate changing switch 10 when the commands of "actuating signals" from group of keys 12 and the commands of a "co-acting signal" from the operation changing switch 9 have been received. And this process includes to compute position and attitude of workpiece handling robot 1 at the starting time of manual teaching operations, and to compute position and attitude of tool 2n against workpiece 1m at the starting time of manual teaching operations.

The second process is to command carrying out the following third process by means of estimating the state after a preset infinitesimal time ΔT, e.g., one-twentieth of a second when "actuating signals" in the first process are maintained. Or this process is to command returning to the first process when "actuating signals" have already changed into different ones. Or this process is to command terminating teaching operations when all of "actuating signals" have already vanished.

The third process is not only to calculate position and attitude of workpiece handling robot 1 but to previously calculate position and attitude of tool handling robot 2 by use of position and attitude of tool 2n against workpiece 1m at the starting time of manual teaching operations, which were calculated at the first process, and by use of position and attitude of workpiece handling robot 1 at the starting time of manual teaching operations, which were calculated at the first process.

The fourth process is not only to calculate "joint variables" of workpiece handling robot 1 by use of position and attitude of workpiece handling robot 1 which have were calculated at the third process but to calculate "joint variables" of tool handling robot 2 by use of position and attitude of tool handling robot 2 which were calculated at the third process.

The fifth process is not only to previously calculate "actuating values for actuators" a_{w1-i} , a_{w2-i} , · · · , a_{w6-i} of workpiece handling robot 1 by use of "joint variables" of workpiece handling robot 1 which were calculated at the fourth process but to previously calculate "actuating values for actuators" aₜ₁₋ᵢ , aₜ₂₋ᵢ , · · · , aₜ₆₋ᵢ of tool handling robot 2 by use of "joint variables" of tool handling robot 2. And this process includes not only to synchronously output the signals of "actuating values for actuators" a_{w2-i} , a_{w2-i} , · · · , a_{w6-i} of workpiece handling robot 1 and the signals of "actuating values for actuators" aₜ₁₋ᵢ , aₜ₂₋ᵢ , · · · , aₜ₆₋ᵢ of tool handling robot 2 just after an infinitesimal time ΔT, e.g., one-twentieth of a second, but to command repeating on and after the second process.

The "control means for manual teaching operations" 4A provides a program for carrying out the above-mentioned "co-action" which associates the change of position and attitude of workpiece 1m on workpiece handling robot 1 with the change of position and attitude of tool 2n on tool handling robot 2. In addition to this program, the control means 4A also provides a program carrying out the "sole-action" which acts either workpiece handling robot 1 or tool handling robot 2 according to the robot changing switch 7 when "sole-action" which does not associate the change of position and attitude of workpiece 1m on workpiece handling robot 1 with the change of position and attitude of tool 2n on tool handling robot 2 is selected by the operation changing switch 9.

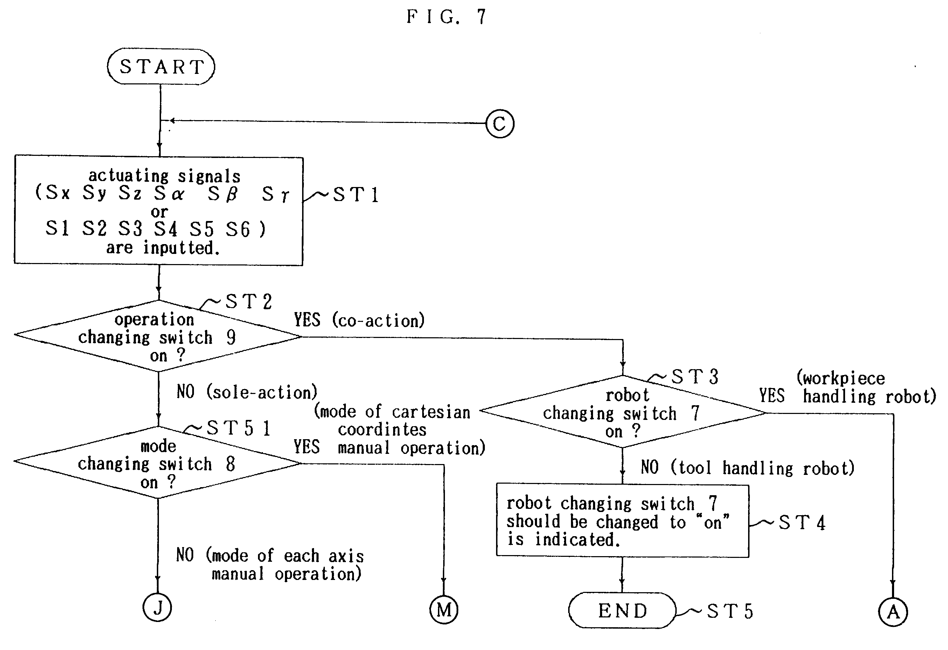

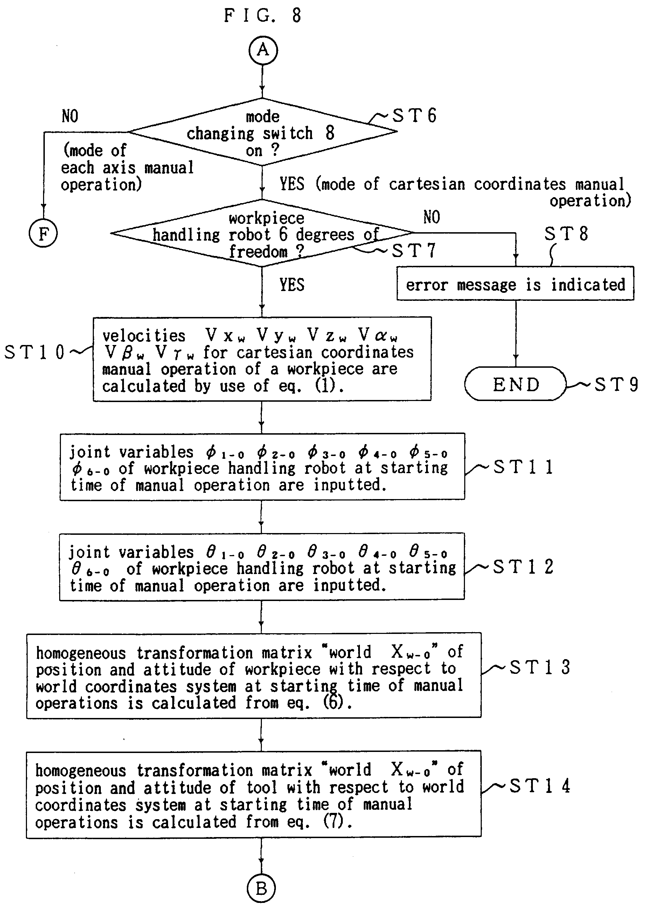

Referring to some of flow charts in and after Fig.7, the manual teaching operations of workpiece handling robot 1 and tool handling robot 2 in the above-mentioned system related to the present invention are described as follows;
[ 1 ] The "co-acting cartesian coordinates manual operation" is explained below, which is in a state that "mode of cartesian coordinates manual operation" is selected by the mode changing switch 8 and "co-action" is selected by the operation changing switch 9. This means the referential point 56 of workpiece 1m with respect to the world coordinates system 51 as shown in Fig. 5 is changed into desired position and attitude thereof without changing the relative position and attitude between tool 2n and workpiece 1m.
   An operator chooses "co-action" in the operation changing switch 9, "mode of cartesian coordinates manual operation" in the mode changing switch 8 and "workpiece handling robot" in the robot changing switch 7 on the teach pendant 3. Moreover, a desired rate "r", e.g., 0.2, which is indicated as " r_{b} ", is chosen in the rate changing switch 10.
   An operator presses desired keys, e.g., 12b, 12c and 12E. The procedure till they will be released is as follows;
   [ a ] : The first process consists of the after-mentioned [ a-1 ] to [ a-4 ].
      Actuating signals are inputted to the control equipment by means of pressing keys 12b, 12c and 12E [ see step 1 in the flow chart of Fig. 7, such as ST1 is indicated after this.]. As the operation changing switch 9 is "on", i.e., being selected "co-action" [ ST2 ], the robot changing switch 7 is "on", i.e., being designated "workpiece handling robot" [ ST3 ] and the mode changing switch 8 is "on", i.e., being selected "mode of cartesian coordinates manual operation" [ ST6 in Fig.8 ], the procedure is led to step 7. If the robot changing switch 7 is "off", i.e., being designated "tool handling robot" [ ST3 ], the procedure for controlling later becomes impossible. In this case it is indicated on the indicating device that the robot changing switch 7 should be "on", i.e., a message of designating "workpiece handling robot" appears in an undrawn CRT etc. [ ST4 ], the procedure is terminated at this time [ ST5 ].
      A workpiece handling robot 1 may be used a manipulator of 6 degrees of freedom or a positioner of less than 3 degrees of freedom. A manipulator of 6 degrees of freedom only is, however, applied to the control in this embodiment of the present invention, therefore, in step 7 it is discriminated whether workpiece handling robot 1 is a manipulator of 6 degrees of freedom or not.
      As the degree of freedom of workpiece handling robot 1 is previously stored in "control means for manual teaching operations" 4A, the discrimination of whether workpiece handling robot 1 is 6 degrees of freedom is carried out by means of said stored signal. If workpiece handling robot 1 is a positioner, a message that the procedure for controlling later is impossible is indicated in an undrawn CRT etc. [ ST8 ], the procedure is terminated at that time [ ST9 ].
      The program includes a protective program to prevent a reckless operation of the computer, so that "cartesian coordinates manual operation" may become impossible unless workpiece handling robot 1 is 6 degrees of freedom. As a positioner is generally less than 3 degrees of freedom, "cartesian coordinates manual operation" can not be carried out, but said positioner is capable to be carried out by means of "mode of each axis manual operation" only mentioned later. If the workpiece handling robot 1 is 6 degrees of freedom [ ST7 ], the procedure is led to step 10.
      [ a-1 ]; Velocities for translation and rotation of the referential point 56 of workpiece 1m in the absilute coordinates system 51 are calculated as follows;
         The velocities Vx_{w} ,Vy_{w}, Vz_{w} ,Vα_{w} ,Vβ_{w} ,Vγ_{w} are computed by use of actuating signals Sx , Sy , Sz , Sα , Sβ , Sγ generated by keys 12b, 12c and 12E, a designated rate "r_{b} " and maximum values Vx_{w0} , Vy_{w0} , Vz_{w0} , Vα_{w0} , Vβ_{w0} , Vγ_{w0} memorized in a velocity table for "cartesian coordinates manual operation" of workpiece 1m [ ST10 ], from equations (1).$\begin{matrix}\begin{matrix}{\text{Vx}}_{\text{w}} {\text{= Sx × r}}_{\text{b}} {\text{× Vx}}_{\text{w0}} \\ {\text{Vy}}_{\text{w}} {\text{= Sy × r}}_{\text{b}} {\text{× Vy}}_{\text{w0}} \\ {\text{Vz}}_{\text{w}} {\text{= Sz × r}}_{\text{b}} {\text{× Vz}}_{\text{w0}} \\ {\text{Vα}}_{\text{w}} {\text{= Sα × r}}_{\text{b}} {\text{× Vα}}_{\text{w0}} \\ {\text{Vβ}}_{\text{w}} {\text{= Sβ × r}}_{\text{b}} {\text{× Vβ}}_{\text{w0}} \\ {\text{Vγ}}_{\text{w}} {\text{= Sγ × r}}_{\text{b}} {\text{× Vγ}}_{\text{w0}}\end{matrix}\end{matrix}$
         The above-mentioned Sx, Sy , · · · ,Sγ are as follows;
         pressing each of keys 12a ∼ 12f produces a signal "+1" for each output;
         pressing each of keys 12A ∼ 12F produces a signal "-1" for each output;
         releasing each of keys 12a ∼ 12f, 12A ∼ 12F produces a signal "0" for each output.

         Since keys 12b, 12c and 12E only are pressed in this example,$\begin{matrix}\begin{matrix}{\text{Sx = 0, thus, Vx}}_{\text{w}} \text{= 0} \\ {\text{Sy = + 1, thus, Vy}}_{\text{w}} {\text{= r}}_{\text{b}} {\text{× Vy}}_{\text{w0}} \\ {\text{Sz = + 1, thus, Vz}}_{\text{w}} {\text{= r}}_{\text{b}} {\text{× Vz}}_{\text{w0}} \\ {\text{Sα = 0, thus, Vα}}_{\text{w}} \text{= 0} \\ {\text{Sβ = - 1, thus, Vβ}}_{\text{w}} {\text{= - r}}_{\text{b}} {\text{× Vβ}}_{\text{w0}} \\ {\text{Sγ = 0, thus, Vγ}}_{\text{w}} \text{= 0}\end{matrix}\end{matrix}$
      [ a-2 ] ; Position and attitude of workpiece handling robot 1 at the starting time of manual teaching operations are calculated by use of actuating signals as follows;
         "Joint variables" φ₁₋₀, φ₂₋₀, · · · · , φ₆₋₀ of workpiece handling robot 1 at the starting time of manual teaching operations are inputted [ ST11 ]. Position and attitude W₂₋₀ of the holding point 53 of workpiece 1m with respect to the base point 52 of workpiece handling robot 1 is formulated as equation (3), by a product of homogeneous transformation matrixes of equation (2) which uses "link parameters" indicated by Denavit-Hartenberg notation.$\begin{matrix}\begin{matrix}\begin{matrix}{\text{A}}_{\text{jw}} {\text{=Rot(Z, φ}}_{\text{j}} {\text{) · Trans(a}}_{\text{jw}} {\text{, 0, d}}_{\text{jw}} {\text{) · Rot(X, α}}_{\text{jw}} \text{)}\end{matrix} \\ \begin{matrix}{\text{W}}_{\text{2-0}} {\text{= A}}_{\text{1w}} {\text{· A}}_{\text{2w}} {\text{· A}}_{\text{3w}} {\text{· A}}_{\text{4w}} {\text{· A}}_{\text{5w}} {\text{· A}}_{\text{6w}}\end{matrix}\end{matrix}\end{matrix}$
         The simbols in equation (2) are as follows;
         φⱼ is a variable of j-th joint of workpiece handling robot 1.
         a_{jw} is a length of the j-th link of workpiece handling robot 1, which is a fixed value.
         d_{jw} is a distance between the (j-1)-th link and the j-th one of workpiece handling robot 1, which is a fixed value.
         α_{jw} is an angle between the (j-1)-th link and the j-th one of workpiece handling robot 1, which is a fixed value.
      [ a-3 ] ; Position and the attitude of the tip point 57 of tool 2n with respect to the referential point 56 of workpiece 1m at the starting time of manual teaching operations are calculated.
         "Joint variables" θ₁₋₀ , θ₂₋₀ , · · · , θ₆₋₀ of tool handling robot 2 at the starting time of manual teaching operations are inputted [ ST12 ]. Position and attitude T₂₋₀ of the installation point 55 of tool 2n with respect to the base point 54 of tool handling robot 2 is formulated as equation (5), by a product of homogeneous transformation matrixes of equation (4) which uses "link parameters" indicated by Denavit-Hartenberg notation.$\begin{matrix}\begin{matrix}\begin{matrix}{\text{A}}_{\text{jt}} {\text{= Rot(Z, θ}}_{\text{j}} {\text{) · Trans(a}}_{\text{jt}} {\text{, 0, d}}_{\text{jt}} {\text{) · Rot(X, α}}_{\text{jt}} \text{)}\end{matrix} \\ \begin{matrix}{\text{T}}_{\text{2-0}} {\text{= A}}_{\text{1t}} {\text{· A}}_{\text{2t}} {\text{· A}}_{\text{3t}} {\text{· A}}_{\text{4t}} {\text{· A}}_{\text{5t}} {\text{· A}}_{\text{6t}}\end{matrix}\end{matrix}\end{matrix}$
         The simbols in equation (4) are as follows;
         θⱼ is a variable of the j-th joint of tool handling robot 2.
         aⱼₜ is a length of the j-th link of tool handling robot 2, which is a fixed value.
         dⱼₜ is a distance between the (j-1)-th link and the j-th one of tool handling robot 2, which is a fixed value.
         αⱼₜ is an angle between the (j-1)-th link and the j-th one of tool handling robot 2, which is a fixed value.

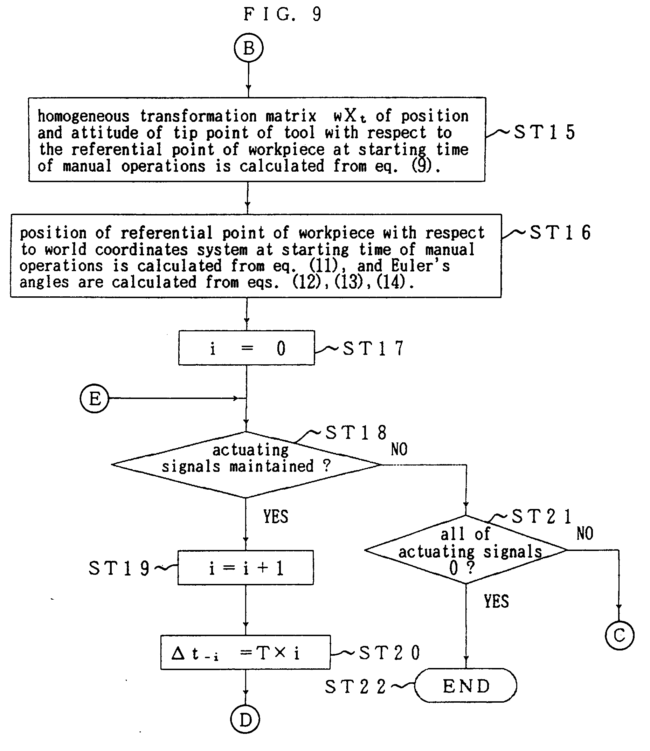

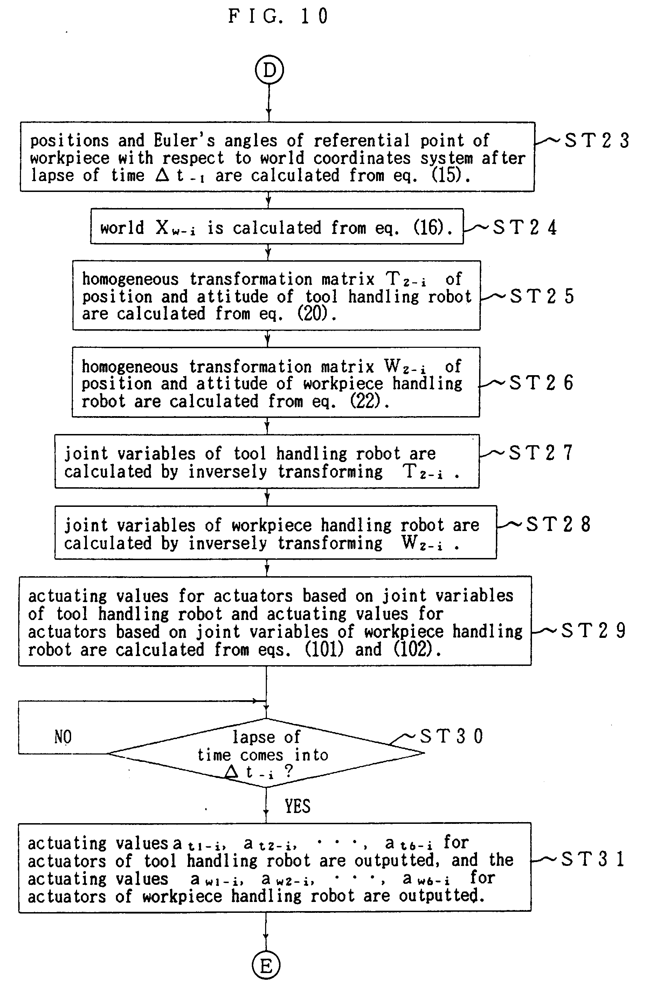

         A homogeneous transformation matrix " world X_{w-o} " of position and attitude of the referential point 56 of the workpiece with respect to the world coordinates system 51 as shown in Fig. 5 is calculated by equation (6) [ ST13 ].${\text{world X}}_{\text{w-o}} {\text{= Z}}_{\text{w}} {\text{· W}}_{\text{2-0}} {\text{· E}}_{\text{w}}$ where Z_{w} is a homogeneous transformation matrix of position and attitude of the base point 52 of workpiece handling robot 1 with respect to the world coordinates system 51 of Fig. 5, and E_{w} is a homogeneous transformation matrix of position and attitude of the referential point 56 of the workpiece with respect to the holding point 53 of workpiece 1m. These data are previously stored in the "control means for manual teaching operations" 4A.
         A homogeneous transformation matrix " world Xₜ₋ₒ " of position and attitude of the tip point 57 of tool 2n with respect to the world coordinates system 51 is calculated by equation (7) [ ST14 ].${\text{world X}}_{\text{t-o}} {\text{= Z}}_{\text{t}} {\text{· T}}_{\text{2-0}} {\text{· E}}_{\text{t}}$ where Zₜ is a homogeneous transformation matrix of position and attitude of the base point 54 of tool handling robot 2 with respect to the world coordinates system 51, and Eₜ is a homogeneous transformation matrix of position and attitude of the tip point 57 of the tool with respect to the installation point 55 of tool 2n. These data are also previously stored in the "control means for manual teaching operations" 4A.
         Assuming that a homogeneous transformation matrix of position and attitude of the tip point 57 of tool 2n with respect to the referential point 56 of the workpiece is " wXₜ ", a following equation is formulated.${\text{world X}}_{\text{t-o}} {\text{= world X}}_{\text{w-o}} {\text{· wX}}_{\text{t}}$
         Therefore, wXₜ is calculated by equation (9) [ ST15 in Fig. 9 ].${\text{wX}}_{\text{t}} {\text{= ( world X}}_{\text{w-o}} {\text{)}}^{\text{-1}} {\text{· ( world X}}_{\text{t-o}} \text{)}$
         A homogeneous transformation matrix " world X_{w-o} " of position and attitude of the referential point 56 of workpiece 1m with respect to the world coordinates system 51 is formulated as a following equation. 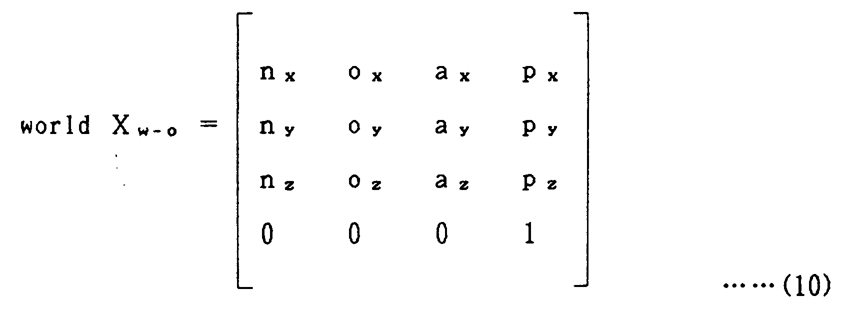 By transforming the above equations, the data for position X_{w-o} , Y_{w-o} , Z_{w-o} and the data of Euler's angles α_{w-o} , β_{w-o} , γ_{w-o} for attitude of the referential point 56 of the workpiece with respect to the world coordinates system 51 at the starting time of manual operations are obtained. The 6 equivalent parameters are calculated by means of following equations [ ST16 ]. 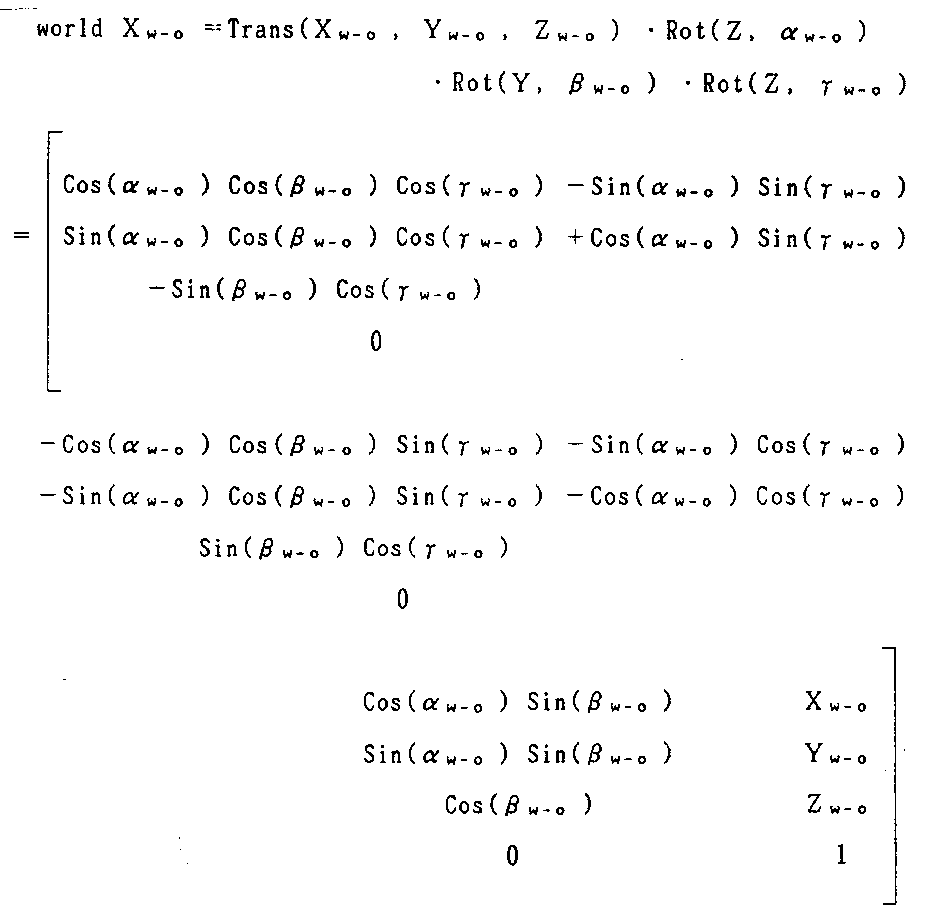 $\begin{matrix}\begin{matrix}\begin{matrix}{\text{X}}_{\text{w-o}} {\text{= p}}_{\text{x}} {\text{, Y}}_{\text{w-o}} {\text{= p}}_{\text{y}} {\text{, Z}}_{\text{w-o}} {\text{= p}}_{\text{z}}\end{matrix} \\ \begin{matrix}{\text{α}}_{\text{w-o}} {\text{= Cos}}^{\text{-1}} {\text{(a}}_{\text{x}} {\text{/Sin(β}}_{\text{w-o}} \text{) )}\end{matrix} \\ \begin{matrix}{\text{β}}_{\text{w-o}} {\text{= Cos}}^{\text{-1}} {\text{(a}}_{\text{z}} \text{)}\end{matrix} \\ \begin{matrix}{\text{γ}}_{\text{w-o}} {\text{= Sin}}^{\text{-1}} {\text{(o}}_{\text{z}} {\text{/Sin(β}}_{\text{w-o}} \text{) )}\end{matrix}\end{matrix}\end{matrix}$
      [ a-4 ] ; Setting up i = 0, and a lapse of time Δt₋₁ from the starting time of manual operations is set equal to "0" [ ST17 ].
   [ b ] : The second process is as follows;
      The discrimination of whether keys 12b, 12c and 12E previously pressed have been released or not, i.e., whether actuating signals are maintained or not, is carried out [ ST18 ]. If all of actuating signals are maintained, a infinitesimal time ΔT is added to the lapse of time Δt₋ᵢ [ ST19, ST20 ], and carrying out the third process is commanded after the lapse of time is replaced with Δt₋ᵢ₊₁ . If all of keys 12b, 12c and 12E have already been released [ ST21 in Fig. 9 ], the teaching operation is terminated [ ST22 ]. If the keys have been pressed are different from previous ones, i.e., keys 12a, 12D and 12E have already been pressed instead of keys 12b, 12c and 12E [ ST21 ], the procedure is repeated from step 1 of the first process by use of new actuating signals thereof.
   [ c ] : The third process is as follows; This is carrying out by receiving the command from the second process.
      Position X_{w-i} , Y_{w-i} , Z_{w-i} and Euler's angle α_{w-i} , β_{w-i} , γ_{w-i} of attitude of the referential point 56 of workpiece 1m with respect to the world coordinates system 51 after the lapse of time Δt₋ᵢ, i.e., after ΔT × i, are calculated [ ST23 in Fig. 10 ].$\begin{matrix}\begin{matrix}{\text{X}}_{\text{w-i}} {\text{= X}}_{\text{w-o}} {\text{+ Vx}}_{\text{w}} {\text{1 × Δt}}_{\text{-i}} \\ {\text{Y}}_{\text{w-i}} {\text{= Y}}_{\text{w-o}} {\text{+ Vy}}_{\text{w}} {\text{× Δt}}_{\text{-i}} \\ {\text{Z}}_{\text{w-i}} {\text{= Z}}_{\text{w-o}} {\text{+ Vz}}_{\text{w}} {\text{× Δt}}_{\text{-i}} \\ {\text{α}}_{\text{w-i}} {\text{= α}}_{\text{w-o}} {\text{+ Vα}}_{\text{w}} {\text{× Δ t}}_{\text{-i}} \\ {\text{β}}_{\text{w-i}} {\text{= β}}_{\text{w-o}} {\text{+ Vβ}}_{\text{w}} {\text{× Δt}}_{\text{-i}} \\ {\text{γ}}_{\text{w-i}} {\text{= γ}}_{\text{w-o}} {\text{+ Vγ}}_{\text{w}} {\text{× Δt}}_{\text{-i}}\end{matrix}\end{matrix}$
      A homogeneous transformation matrix " world X_{w-1} " of position and attitude of the referential point 56 of workpiece 1m is calculated by equation (16) [ ST24 ].${\text{world X}}_{\text{w-i}} {\text{= Trans(X}}_{\text{w-i}} {\text{, Y}}_{\text{w-i}} {\text{, Z}}_{\text{w-i}} {\text{) · Rot(Z, α}}_{\text{w-i}} {\text{) · Rot (Y, β}}_{\text{w-i}} {\text{) · Rot(Z, γ}}_{\text{w-i}} \text{)}$
      Even if workpiece 1m acts according to equation (16), position and attitude T₂₋ᵢ , which relative position and attitude of tool 2n against workpiece 1m are never changed, of tool handling robot 2 are calculated.
      A following equation is formulated as the above-mentioned equation (8).${\text{world X}}_{\text{t-i}} {\text{= world X}}_{\text{w-i}} {\text{· wX}}_{\text{t}}$
      A following equation is formulated from the relation of coordinates as the above-mentioned equation (7).${\text{world X}}_{\text{t-i}} {\text{= Z}}_{\text{t}} {\text{· T}}_{\text{2-i}} {\text{· E}}_{\text{t}}$
      From equation (18), a following equation (19) is formulated.${\text{T}}_{\text{2-i}} {\text{= (Z}}_{\text{t}} {\text{)}}^{\text{-1}} {\text{· world X}}_{\text{t-i}} {\text{· (E}}_{\text{t}} {\text{)}}^{\text{-1}}$
      Substituting equation (17) into equation (19) results equation (20) [ ST25 ].${\text{T}}_{\text{2-i}} {\text{= (Z}}_{\text{t}} {\text{)}}^{\text{-1}} {\text{· world X}}_{\text{w-i}} {\text{· wX}}_{\text{t}} {\text{· (E}}_{\text{t}} {\text{)}}^{\text{-1}}$
      On the other hand, equation (21) is formulated as an above-mentioned equation (6),${\text{world X}}_{\text{w-i}} {\text{= Z}}_{\text{w}} {\text{· W}}_{\text{2-i}} {\text{· E}}_{\text{w}}$ and a homogeneous transformation matrix W₂₋ᵢ of position and attitude of workpiece handling robot 1 can be calculated by equation (22) [ ST26 ].${\text{W}}_{\text{2-i}} {\text{= (Z}}_{\text{w}} {\text{)}}^{\text{-1}} {\text{· world X}}_{\text{w-i}} {\text{· (E}}_{\text{w}} {\text{)}}^{\text{-1}}$
   [ d ] : The fourth process consists of the following [ d-1 ] to [ d-2 ].
      [ d-1 ] ; "Joint variables" θ₁₋ᵢ , θ₂₋ᵢ , · · · , θ₆₋ᵢ of tool handling robot 2 are obtained by inversely transforming T₂₋ᵢ of equation (20) [ ST27 ].
      [ d-2 ] ; "Joint variables" φ₁₋ᵢ , φ₂₋ᵢ , · · · , φ₆₋ᵢ of workpiece handling robot 1 are obtained by inversely transforming W₂₋ᵢ of equation (22) [ ST28 ].
   [ e ] : The fifth process is as follows;

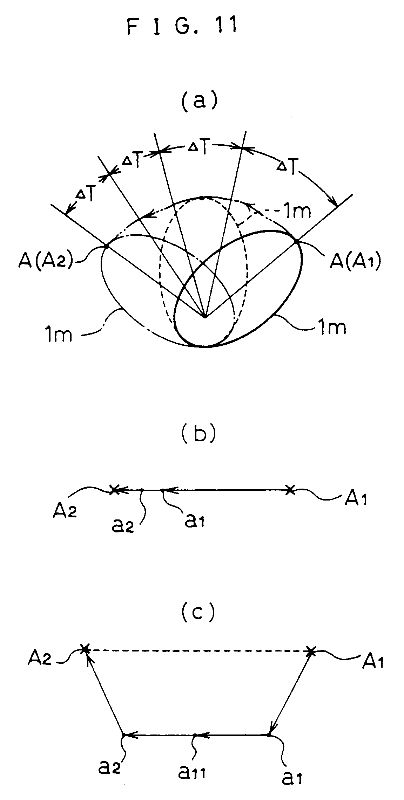

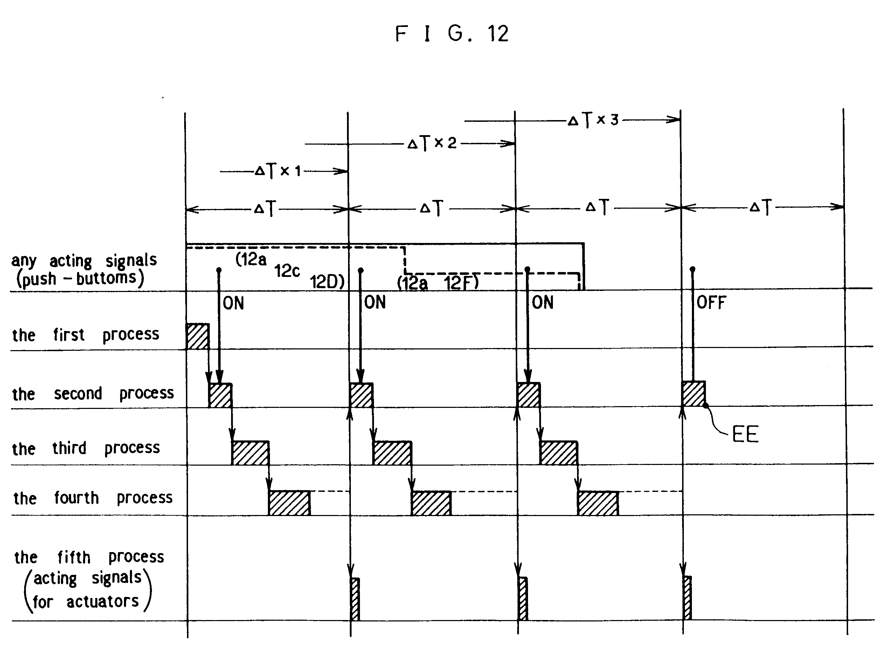

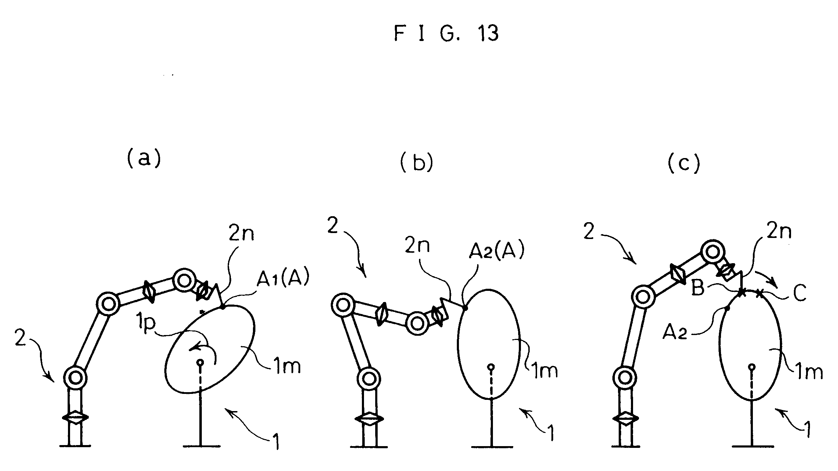

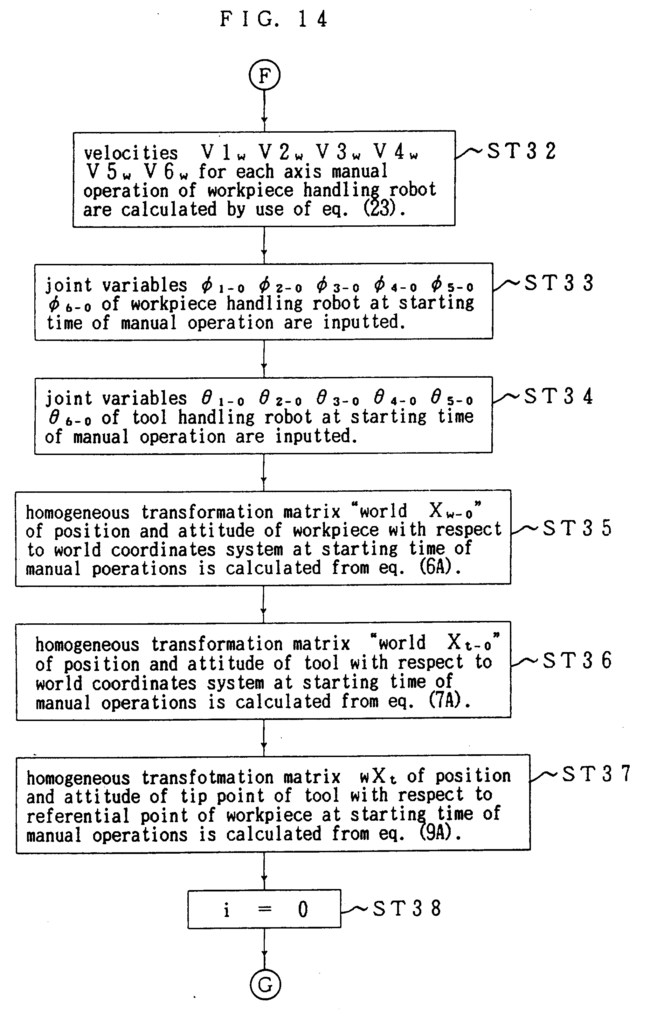

   Actuating quantities of "joint variables" per unit of "actuating values for actuators" of tool handling robot 2 and workpiece handling robot 1 respectively are assumed Rₜ₁ , Rₜ₂ , · · · , Rₜ₆ , R_{W1} , R_{W2} , · · · , R_{W6}, which are predetermined values every robot and are previously stored in the "control means for manual teaching operations" 4A.
   Assuming that actuating values for actuators 17T₁ , 17T₂ , · · · , 17T₆ of tool handling robot 2 are aₜ₁₋ᵢ , aₜ₂₋ᵢ , · · · , a_{t6 -i}, and actuating values for actuators 17W₁ , 17W₂ , · · · , 17W₆ of workpiece handling robot 1 are a_{w1-i} , a_{w2-i} , · · · , a_{w6-i}, they are as follows [ ST29 ];$\begin{matrix}\begin{matrix}{\text{a}}_{\text{t1-i}} {\text{= θ}}_{\text{1-i}} {\text{/ R}}_{\text{t1}} \\ {\text{a}}_{\text{t2-i}} {\text{= θ}}_{\text{2-i}} {\text{/ R}}_{\text{t2}} \\ {\text{a}}_{\text{t3-i}} {\text{= θ}}_{\text{3-i}} {\text{/ R}}_{\text{t3}} \\ {\text{a}}_{\text{t4-i}} {\text{= θ}}_{\text{4-i}} {\text{/ R}}_{\text{t4}} \\ {\text{a}}_{\text{t5-i}} {\text{= θ}}_{\text{5-i}} {\text{/ R}}_{\text{t5}} \\ {\text{a}}_{\text{t6-i}} {\text{= θ}}_{\text{6-i}} {\text{/ R}}_{\text{t6}}\end{matrix}\end{matrix}$$\begin{matrix}\begin{matrix}{\text{a}}_{\text{w1-i}} {\text{= φ}}_{\text{1-i}} {\text{/ R}}_{\text{w1}} \\ {\text{a}}_{\text{w2-i}} {\text{= φ}}_{\text{2-i}} {\text{/ R}}_{\text{w2}} \\ {\text{a}}_{\text{w3-i}} {\text{= φ}}_{\text{3-i}} {\text{/ R}}_{\text{w3}} \\ {\text{a}}_{\text{w4-i}} {\text{= φ}}_{\text{4-i}} {\text{/ R}}_{\text{w4}} \\ {\text{a}}_{\text{w5-i}} {\text{= φ}}_{\text{5-i}} {\text{/ R}}_{\text{w5}} \\ {\text{a}}_{\text{w6-i}} {\text{= φ}}_{\text{6-i}} {\text{/ R}}_{\text{w6}}\end{matrix}\end{matrix}$
   Such actuating values aₜ₁₋ᵢ , aₜ₂₋ᵢ , · · · , aₜ₆₋ᵢ for actuators of tool handling robot 2 and actuating values a_{w1-i} , a_{w2-i} , · · · , a_{w6-i} for actuators of workpiece handling robot 1 are outputted just after the lapse of time comes into ΔT × i [ ST30, ST31 ] , and the procedure is returned to step 18 of the second process.
   The control function by means of the "control means for manual teaching operations" 4A, which includes an algorithm thereof, are described above. An example of actual teaching operations is explained referring to Fig. 11(a) as follows; In the case that position and attitude of a teaching point A₁ at the first postioning on workpiece 1m indicated by a solid line is moved to that of a teaching point A₂ at the second postioning thereon indicated by a single dotted line, an operator has only to press, e.g., once, a group of keys 12, if the path from the first teaching point A₁ till the next one A₂ is simple. In this operation, step 18 is repeated every after adding ΔT, e.g., one-twentieth of a second [ ST19, ST20 ]. The workpiece 1m and tool 2n are moved according to the output signals of step 31 every said repetition.
   The process is repeated till ΔT × n every ΔT as shown in a timing chart of Fig. 12. The repetition from the second process till the fifth process every ΔT is comprehensible. The intervals of ΔT in Fig. 11(a) are indicated different each other, because workpiece 1m is not always moved same distance every ΔT and attitude of workpiece 1m is often changed three-dimensionally.
   When the state which keys 12a, 12c and 12D are pressed is changed to the state which keys 12a and 12F are pressed, actuating signals are changed as a broken line indicated at the upper part of a timing chart in Fig. 12. Even if actuating signals are changed as above, the procedure is returned to step 1 from step 21, as long as all of signals are not "0". The procedure is carried out till step 31 according to actuating signals changed as above. In this case, actuators 17W, 17T actuate n times from the first ΔT × 1 till the last ΔT × n.
   What all of actuating signals have changed to "0" at step 21 means unnecessity of moving workpiece 1m, and the controlling function is completed at a finishing point EE in the timing chart. After this, "co-action" is futhermore repeated or "sole-action" is carried out from step 2 as mentioned later.
   The case that the above-mentioned "co-action" is repeated in spite that all of actuating signals have already changed to "0" means a case that position and attitude of tool 2n against workpiece 1m do not still become desired position and attitude thereof at the second positioning. In this case, the above-mentioned procedure is continued till the second positioning is completed. Such an example is bliefly described as follows;
   If the path between point A₁ at the first positioning and point A₂ at the second positioning is straight and long, a rate changing swicth 10 is preferable to be changed as follows. The point a₁ and a₂ are chosen in the middle of the path between point A₁ and point A₂ as shown in Fig. 11(b). The rate of 1.0 is selected in the route from point A₁ till a₁, 0.5 from point a₁ till a₂, 0.1 from point a₂ till A₂. Each of points a₁, a₂, A₂ corresponds to the finishing point EE in Fig. 12 respectively. Position and attitude at a temporary point a₁ are ignored and are not memorized after arriving at a next temporary point of a₂. Similarly, position and attitude at the temporary point a₂ are also ignored. On the other hand, position and attitude at the point A₂ are memorized as teaching data.
   Therefore, directly moving from point A₁ to A₂ is played back at the rate of 1.0 in real processing operations of, for example, in the welding operations, so as to keep position and attitude of tool 2n against workpiece 1m at the starting time of manual operations. When the rate has been set up to a lower value in the final route from above-mentioned point a₂ till point A₂, it may be prevented from carelessly overshooting the target A₂ and it may be promoted to relieve the tension of a teaching operator.
   In the case that there is a protrusion on the way from point A ₁ to A₂ on workpiece 1m, the route for point A₂ should be avoided it. The route via points a₁ and a₂ which do not exist on the segment A₁ A₂ indicated by a broken line in Fig, 11(c) is selected for a teaching path. In this case, not only "mode of cartesian coordinates manual operation" may be adopted between point A₁ and a₁ but "mode of each axis manual operation" mentioned later may be adopted between point a₁, and a₂, moreover, "mode of cartesian coordinates manual operation" may be adopted again between point a ₂ and A₂. Each of points a₁, a₂, A₂ corresponds to the finishing point EE in Fig. 12. When "mode of each axis manual operation" is adopted between the point a₁ and a₂, it is also possible to change the rate at the point of a₁₁ in the middle of the route between a₁ and a₂.
   The state of the starting time of manual operations means the state of the first positioning as shown in Fig. 13(a), therefore, the teaching point A is a point A₁. The state of the second positioning is achieved via points a₁, a₂ etc. by means of rotating workpiece 1m to the direction of the arrow 1p. The second positioning at the point A₂ is shown in Fig. 13(b). The "co-action" is carried out between Fig. 13(a) and Fig. 13(b). After the teaching point A is shifted to point A₂ at the second positioning, the next teaching point B and the point C after next shown in Fig. 13(c) may be taught by means of "sole-acting manual operation" i.e., moving tool 2n under the condition that workpiece 1m is stopped, or moving workpiece 1m under the condition that tool 2n is stopped.
   The above-mentioned description in Fig. 13 is comprehensible different from that of the prior art in Fig. 24. This means that tool 2n never leaves workpiece 1m between Fig. 13(a) and Fig. 13(b), tool 2n is subjected to the movement of workpiece 1m, and position and attitude of tool 2n against workpiece 1m are always maintained.
[ 2 ] Next, "co-acting each axis manual operation" is explained below, which is in a state that "mode of each axis manual operation" is selected by the mode changing switch 8 and "co-action" is selected by the operation changing switch 9. This means that position and attitude of workpiece 1m are changed to desired ones thereof by means of joints of workpiece handling robot 1 without changing relative position and attitude between tool 2n and workpiece 1m.
   An operator chooses "co-action" in the operation changing switch 9, "mode of each axis manual operation" in the mode changing switch 8 and "workpiece handling robot" in the robot changing switch 7 on teach pendant 3. Moreover, a desired rate "r", e.g., 0.5, which is indicated as "r_{c} ", is chosen in the rate changing switch 10.
   An operator presses desired keys, e.g., 12b and 12D. The procedure till they will be released are as follows;
   [ a ] : The first process consists of the after-mentioned [ a-1 ] to [ a-4 ].
      Actuating signals are inputted into control equipment by means of pressing keys 12b and 12D [ ST1 in Fig. 7]. As the operation changing switch 9 is "on", i.e., being selected "co-action" [ ST2 ], the robot changing switch 7 is "on", i.e., being designated "workpiece handling robot" [ ST3 in Fig. 7 ] and the mode changing switch 8 is "off", i.e., being selected "mode of each axis manual operation" [ ST6 in Fig.8 ], the procedure is led to step 32 in Fig. 14. If the robot changing switch 7 is "off", i.e., being designated "tool handling robot" [ ST3 ], the procedure for controlling later becomes impossible. In this case it is indicated on the indicating device that the robot changing switch 7 should be "on", i.e., a message of designating "workpiece handling robot" appears in an undrawn CRT etc. [ ST4 ], the procedure is terminated at this time [ ST5 ].
      A workpiece handling robot 1 may be a manipulator of 6 degrees of freedom or a positioner of less than 3 degrees of freedom in this "mode of each axis manual operation". A manipulator of 6 degrees of freedom only is applied to controlling in the above-mentiond "mode of cartesian coordinates manual operation". But a positioner of 3 degrees of freedom may be also applied to this embodiment, then, actuating signals generated by the group of keys 12 are S1 to S3 only.
      [ a-1 ]; Velocities for joints of workpiece handling robot 1 are calculated as follows;
         The velocities V1_{w} ,V2_{w} ,V3_{w} ,V4_{w} ,V5_{w} ,V6_{w} are computed by use of actuating signals S1, S2, S3, S4, S5, S6 generated by keys 12b and 12D, a designated rate "r_{c} " and maximum values V1 _{w0} , V2_{w0} , V3_{w0} , V4_{w0} , V5_{w0} , V6_{w0} memorized in a velocity table for "each axis manual operation" of workpiece handling robot 1 [ ST32 n Fig. 14 ], from equations (23).$\begin{matrix}\begin{matrix}{\text{V1}}_{\text{w}} {\text{= S1 × r}}_{\text{c}} {\text{× V1}}_{\text{w0}} \\ {\text{V2}}_{\text{w}} {\text{= S2 × r}}_{\text{c}} {\text{× V2}}_{\text{w0}} \\ {\text{V3}}_{\text{w}} {\text{= S3 × r}}_{\text{c}} {\text{× V3}}_{\text{w0}} \\ {\text{V4}}_{\text{w}} {\text{= S4 × r}}_{\text{c}} {\text{× V4}}_{\text{w0}} \\ {\text{V5}}_{\text{w}} {\text{= S5 × r}}_{\text{c}} {\text{× V5}}_{\text{w0}} \\ {\text{V6}}_{\text{w}} {\text{= S6 × r}}_{\text{c}} {\text{× V6}}_{\text{w0}}\end{matrix}\end{matrix}$
         The above-mentioned S1, S2 , · · · , S6 are as follows;
         pressing each of keys 12a ∼ 12f produces a signal "+1" respectively,
         pressing each of keys 12A ∼ 12F produces a signal "-1" respectively, releasing each of keys 12a ∼ 12f, 12A ∼ 12F produces a signal
         "0" respectively.

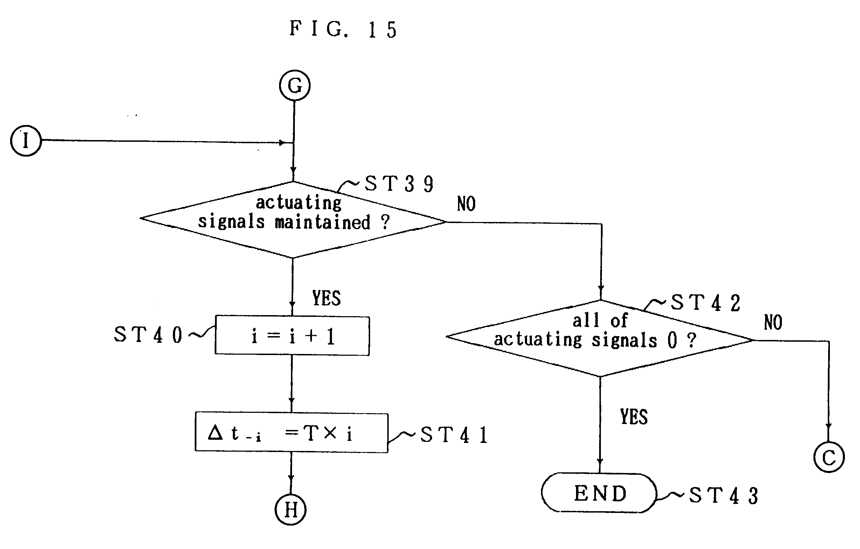

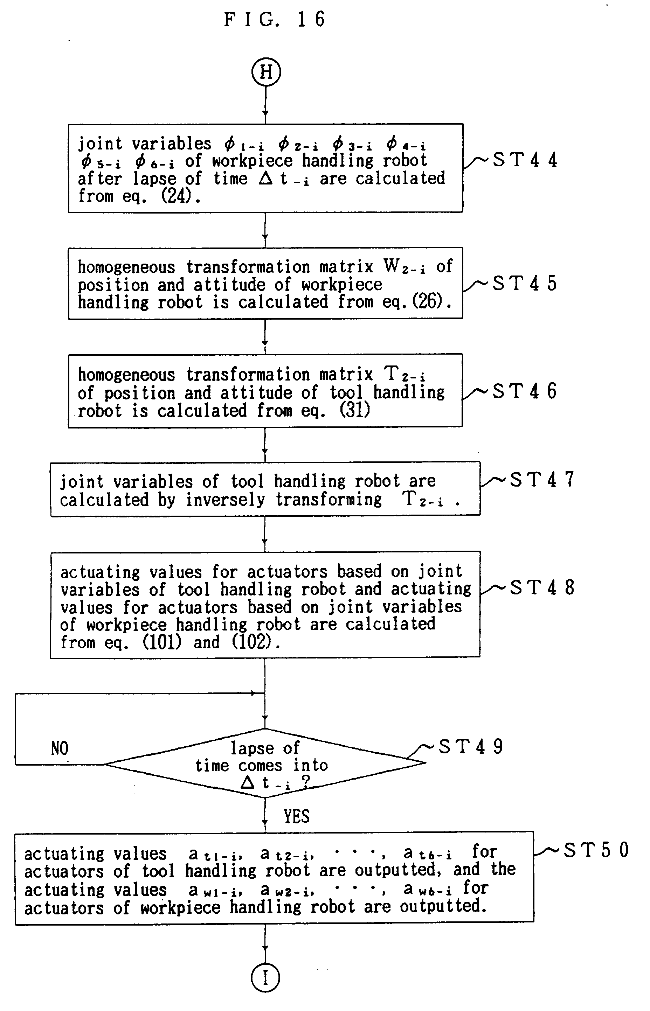

         Since keys 12b and 12D only are pressed in this example, similar to the above-mentiond example,${\text{V1}}_{\text{w}} {\text{= 0, V3}}_{\text{w}} {\text{= 0, V5}}_{\text{w}} {\text{= 0, V6}}_{\text{w}} \text{= 0.}$
      [ a-2 ] ; Position and attitude of workpiece handling robot 1 at the starting time of manual teaching operations are calculated by use of actuating signals as follows;
         "Joint variables" φ₁₋₀ , φ₂₋₀, · · · · , φ₆₋₀ of workpiece handling robot 1 at the starting time of manual teaching operations are inputted [ ST33 ]. Position and attitude W₂₋₀ of the holding point 53 of workpiece 1m with respect to the base point 52 of workpiece handling robot 1 is formulated as equation (3A), by a product of homogeneous transformation matrixes of equation (2A) which uses "link parameters" indicated by Denavit-Hartenberg notation.$\begin{matrix}\begin{matrix}\begin{matrix}{\text{A}}_{\text{jw}} {\text{= Rot(Z, φ}}_{\text{j}} {\text{) · Trans(a}}_{\text{jw}} {\text{, 0, d}}_{\text{jw}} {\text{) · Rot(X, α}}_{\text{jw}} \text{)}\end{matrix} \\ \begin{matrix}{\text{W}}_{\text{2-0}} {\text{= A}}_{\text{1w}} {\text{· A}}_{\text{2w}} {\text{· A}}_{\text{3w}} {\text{· A}}_{\text{4w}} {\text{· A}}_{\text{5w}} {\text{· A}}_{\text{6w}}\end{matrix}\end{matrix}\end{matrix}$
         Equations of (2A) and (3A) are just the same with above-mentioned equations (2) and (3) respectively. And φⱼ , a_{jw} , d_{jw} and α _{jw} are also the same with the explanations after equations (2) and (3).
      [ a-3 ] ; Position and attitude of the tip point 57 of tool 2n with respect to the referential point 56 of workpiece 1m at the starting time of manual teaching operations are calculated as follows;
         "Joint variables" θ₁₋₀ , θ₂₋₀ , · · · , θ₆₋₀ of tool handling robot 2 at the starting time of manual teaching operations are inputted [ ST34 ]. Position and attitude T₂₋₀ of the installation point 55 of tool 2n with respect to the base point 54 of tool handling robot 2 is formulated as equation (5A), by a product of homogeneous transformation matrixes of equation (4A) which uses "link parameters" indicated by Denavit-Hartenberg notation.$\begin{matrix}\begin{matrix}\begin{matrix}{\text{A}}_{\text{jt}} {\text{= Rot(Z, θ}}_{\text{j}} {\text{) · Trans(a}}_{\text{jt}} {\text{, 0, d}}_{\text{jt}} {\text{) · Rot(X, α}}_{\text{jt}} \text{)}\end{matrix} \\ \begin{matrix}{\text{T}}_{\text{2-0}} {\text{= A}}_{\text{1t}} {\text{· A}}_{\text{2t}} {\text{· A}}_{\text{3t}} {\text{· A}}_{\text{4t}} {\text{· A}}_{\text{5t}} {\text{· A}}_{\text{6t}}\end{matrix}\end{matrix}\end{matrix}$
         Equations of (4A) and (5A) are just the same with above-mentioned equations (4) and (5). And φⱼ , aⱼₜ , dⱼₜ and αⱼₜ are also the same with the explanations after equations (4) and (5).
         A hmogeneous transformation matrix " world X_{w-o} " of position and attitude of the referential point 56 of the workpiece with respect to the world coordinates system 51 is calculated as a following equation [ ST35 ].${\text{world X}}_{\text{w-o}} {\text{= Z}}_{\text{w}} {\text{· W}}_{\text{2-0}} {\text{· E}}_{\text{w}}$
         This equation of (6A) is just the same with above-mentioned equations (6). Z_{w} and E_{w} are also the same with the explanations after equation (6).
         A homogeneous transformation matrix " world Xₜ₋ₒ " of position and attitude of the tip point 57 of tool 2n with respect to the world coordinates system 51 is calculated as a following equation [ ST36 ].${\text{world X}}_{\text{t-o}} {\text{= Z}}_{\text{t}} {\text{· T}}_{\text{2-0}} {\text{· E}}_{\text{t}}$
         This equation of (7A) is just the same with above-mentioned equations (7). Zₜ and Eₜ are also the same with the explanations after equation (7).
         Assuming that a homogeneous transformation matrix of position and attitude of the tip point 57 of tool 2n with respect to the referential point 56 of the workpiece is " wXₜ ", a following equation is formulated.${\text{world X}}_{\text{t-o}} {\text{= world X}}_{\text{w-o}} {\text{· wX}}_{\text{t}}$
         Therefore, wXₜ is calculated by equation (9A) [ ST37 ].${\text{wX}}_{\text{t}} {\text{= ( world X}}_{\text{w-o}} {\text{)}}^{\text{-1}} {\text{· ( world X}}_{\text{t-o}} \text{)}$
         Equations of (8A) and (9A) are just the same with above-mentioned equations (8) and (9) respectively.
      [ a-4 ] ; Setting up i = 0, and a lapse of time Δt₋ᵢ from the starting time of manual operations is set up equal to "0" [ ST38 ].
   [ b ] : The second process is as follows;
      The discrimination of whether keys 12b and 12D previously pressed have been released or not, i.e., whether actuating signals are maintained or not, is carried out [ ST39 in Fig. 15 ]. If all of actuating signals are maintained, a infinitesimal time of ΔT is added to the lapse of time Δt₋ᵢ [ ST40, ST41 ], and carrying out the third process is commanded after the lapse of time is replaced with Δt₋ᵢ₊₁. If all of keys 12b and 12D have been already released [ ST42 ], the teaching operation is ternimated [ ST43 ]. If keys have been pressed are different from previous ones, i.e., the key 12c has been already pressed instead of keys 12b and 12D [ ST42 ], the procedure is repeated from step 1 of the first process by use of new actuating signals thereof.
   [ c ] : The third process is as follows; This is carrying out by receiving the command from the second process.
      "Joint variables" φ₁₋ᵢ , φ₂₋ᵢ , · · · , φ₆₋ᵢ of workpiece handling robot 1 after the lapse of time Δt_{-I}, i.e., after ΔT × i , are calculated [ ST44 in Fig. 16].$\begin{matrix}\begin{matrix}{\text{φ}}_{\text{1-i}} {\text{= φ}}_{\text{1-o}} {\text{+ V1}}_{\text{w}} {\text{× Δt}}_{\text{-i}} \\ {\text{φ}}_{\text{2-i}} {\text{= φ}}_{\text{2-o}} {\text{+ V2}}_{\text{w}} {\text{× Δt}}_{\text{-i}} \\ {\text{φ}}_{\text{3-i}} {\text{= φ}}_{\text{3-o}} {\text{+ V3}}_{\text{w}} {\text{× Δt}}_{\text{-i}} \\ {\text{φ}}_{\text{4-i}} {\text{= φ}}_{\text{4-o}} {\text{+ V4}}_{\text{w}} {\text{× Δt}}_{\text{-i}} \\ {\text{φ}}_{\text{5-i}} {\text{= φ}}_{\text{5-o}} {\text{+ V5}}_{\text{w}} {\text{× Δt}}_{\text{-i}} \\ {\text{φ}}_{\text{6-i}} {\text{= φ}}_{\text{6-o}} {\text{+ V6}}_{\text{w}} {\text{× Δt}}_{\text{-i}}\end{matrix}\end{matrix}$
      Position and attitude W₂₋ᵢ of the holding point 53 of workpiece 1m with respect to the base point 52 of workpiece handling robot 1 is formulated as equation (26), by a product of homogeneous transformation matrixes of equation (25) which uses "link parameters" indicated by Denavit-Hartenberg notation [ ST45 ].$\begin{matrix}\begin{matrix}\begin{matrix}{\text{A}}_{\text{jw}} {\text{= Rot( z, φ}}_{\text{j-i}} {\text{) · Trans(a}}_{\text{jw}} {\text{, 0, d}}_{\text{jw}} {\text{) · Rot(x, α}}_{\text{jw}} \text{)}\end{matrix} \\ \begin{matrix}{\text{W}}_{\text{2-i}} {\text{= A}}_{\text{1w}} {\text{· A}}_{\text{2w}} {\text{· A}}_{\text{3w}} {\text{· A}}_{\text{4w}} {\text{· A}}_{\text{5w}} {\text{· A}}_{\text{6w}}\end{matrix}\end{matrix}\end{matrix}$
      The simbols in equation (25) are as follows;
      φⱼ₋ᵢ is a variable of j-th joint of workpiece handling robot 1.
      a_{jw} is a length of the j-th link of workpiece handling robot 1, which is a fixed value.
      d_{jw} is a distance between the (j-1)-th link and the j-th one of workpiece handling robot 1, which is a fixed value.
      α_{jw} is an angle between the (j-1)-th link and the j-th one of workpiece handling robot 1, which is a fixed value.

      When workpiece handling robot 1 acts according to equation (26), position and attitude of T₂₋ᵢ , which relative position and attitude of tool 2n against workpiece 1m are never changed, of tool handling robot 2 are calculated. A homogeneous transformation matrix " world X_{w-i} " of position and attitude of the referential point 56 of the workpiece with respect to the world coordinates system 51 is calculated by a following equation.${\text{world X}}_{\text{w-i}} {\text{= Z}}_{\text{w}} {\text{· W}}_{\text{2-i}} {\text{· E}}_{\text{w}}$
      And a following equation is formulated as the above-mentioned equation (8).${\text{world X}}_{\text{t-i}} {\text{= world X}}_{\text{w-i}} {\text{· wX}}_{\text{t}}$
      A following equation is formulated from relation of coordinates as above-mentioned equation (7).${\text{world X}}_{\text{t-i}} {\text{= Z}}_{\text{t}} {\text{· T}}_{\text{2-i}} {\text{· E}}_{\text{t}}$
      From equation (29), a following equation (30) is formulated.${\text{T}}_{\text{2-i}} {\text{= (Z}}_{\text{t}} {\text{)}}^{\text{-1}} {\text{· world X}}_{\text{t-i}} {\text{· (E}}_{\text{t}} {\text{)}}^{\text{-1}}$
      Substituting equation (27) into equation (30) results equation (31), thus, T₂₋ᵢ is calculated [ ST46 ].${\text{T}}_{\text{2-i}} {\text{= (Z}}_{\text{t}} {\text{)}}^{\text{-1}} {\text{· world X}}_{\text{w-i}} {\text{· wX}}_{\text{t}} {\text{· ( E}}_{\text{t}} {\text{)}}^{\text{-1}}$
   [ d ] : The fourth process is as follows;
      "Joint variables" θ₁₋ᵢ , θ₂₋ᵢ , · · · , θ₆₋ᵢ of tool handling robot 2 are obtained by inversely transforming T₂₋ᵢ of equation (31) [ ST47 ].
      "Joint variables" φ₁₋ᵢ , φ₂₋ᵢ , · · · , φ₆₋ᵢ of workpiece handling robot 1 can be obtained by inversely transforming W₂₋ᵢ of equation (26).
   [ e ] : The fifth process is as follows;
      Actuating quantities for joint variables per unit of actuating values for actuators of tool handling robot 2 and workpiece handling robot 1 respectively are assumed Rₜ₁ , Rₜ₂ , · · · , R ₜ₆ ,R_{W1} , R_{W2} , · · · , R_{W6}. Actuating values for actuators of tool handling robot 2 are aₜ₂₋ᵢ , aₜ₂₋ᵢ , · · · , aₜ₆₋ᵢ are calculated from above-mentioned equation (101), and actuating values for actuators of workpiece handling robot 1 are a_{w1-i} , a _{w2-i} , · · · , a_{w6-i} are calculated from equation (102) [ ST48 ].

   Such actuating values for actuators of tool handling robot 2 and actuating values for actuators of workpiece handling robot 1 are outputted just after the lapse of time comes into ΔT × i [ ST49, ST50 ], and the procedure is returned to step 39 of the second process.
   The repetition of each process from generation of actuating signals till vanishment thereof is shown in a timing chart of Fig. 12 in the case of "mode of co-acting each axis manual operation". Fig. 11, Fig. 12 and Fig. 13 are also applied to this procedure.
   In the state that workpiece 1m is moved to desired position and attitude by means of "mode of co-acting each axis manual operation" or "mode of co-acting cartesian coordinates manual operation", if "co-action" is selected by the operation changing switch 9 on teach pendant 3 and "tool handling robot" is designated by the robot changing switch 7, moving of new desired position and attitude, i.e., an operation from Fig. 13(b) to Fig. 13(c), are achieved by means of "mode of sole-acting each axis manual operation" of tool 2n or by means of "mode of sole-acting cartesian coordinates manual operation" with respect to the world coordinates system 51. These sole-action are described as follows.

The explanation below are "mode of sole-acting each axis manual operation" or "mode of sole-acting cartesian coordinates manual operation" which are the state of the art of the present invention. The present controlling system is comprehensible to be a compound system which is capable to carry out not only "the mode of sole-acting each axis or cartesian coordinates manual opertation" but "the mode of co-acting each axis or cartesian coordinates manual operation".

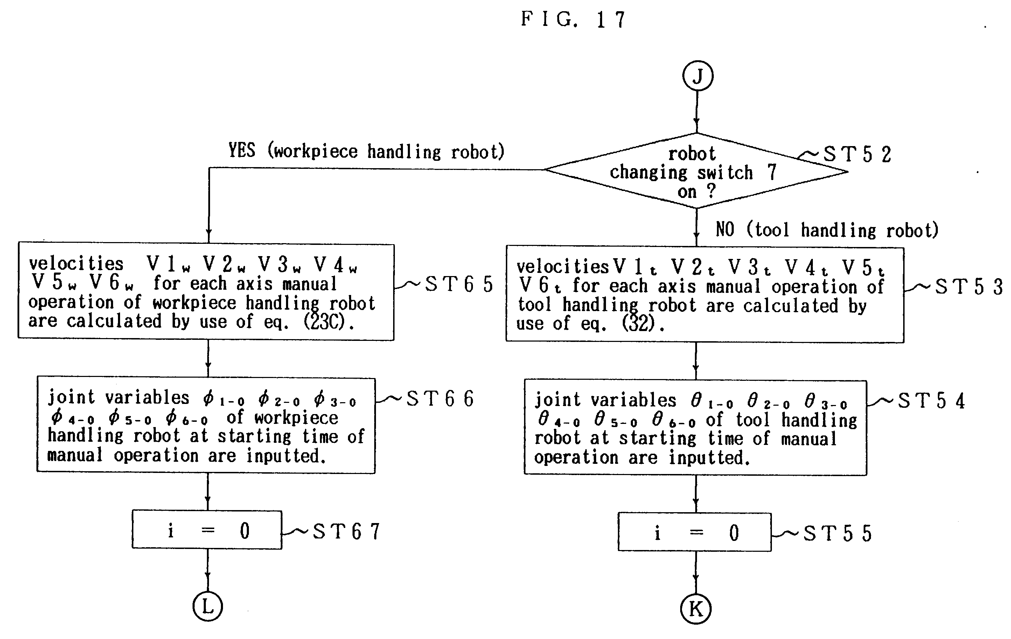

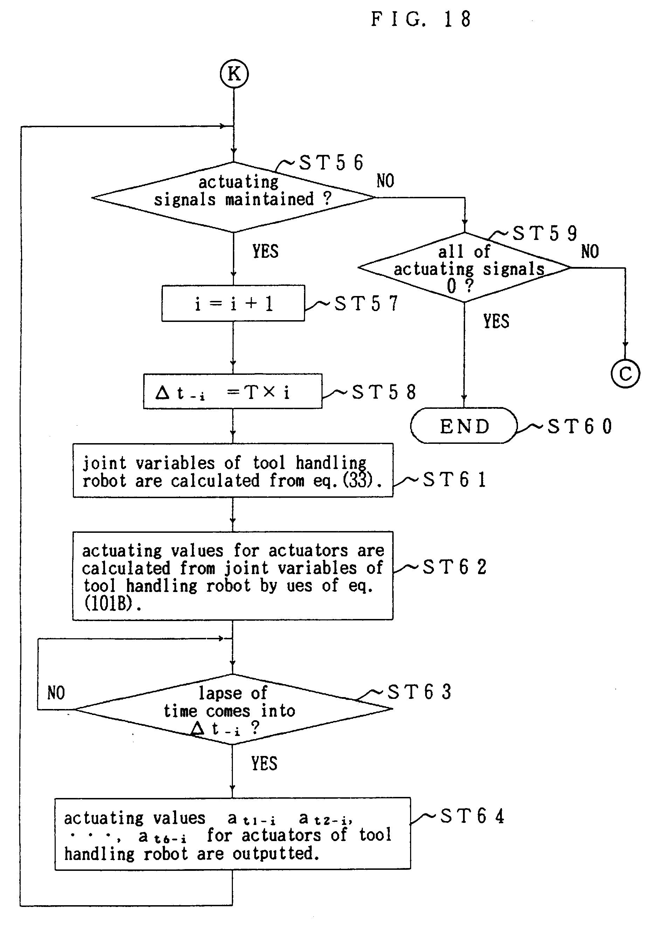

The "sole-acting each axis manual operation" is described below:
[ 1 ] The operation of changing position and attitude of tool 2n into desired position and attitude thereof by means of actuating joints of tool handling robot 2 is as follows;
   An operator chooses "tool handling robot" in the robot changing switch 7, "mode of each axis manual operation" in the mode changing switch 8 and "sole-action" in the operation changing switch 9 on teach pendant 3. Moreover, a desired rate "r", e.g., 0.2, which is indicated as "r_{b} " is chosen in the rate changing switch 10.
   An operator presses desired keys, e.g., 12a and 12c. The procedure till they will be released are as follows;
   [ a ] : The first process consists of following [ a-1 ] to [ a-3 ].
      Actuating signals are inputted to control equipment by means of pressing keys 12a and 12c [ ST1 in Fig. 7 ]. As the operation changing switch 9 is "off", i.e., being selected "sole-action" [ ST2 ], the mode changing switch 8 is "off", i.e., being selected "mode of each axis manual operation" [ ST51 ], and the robot changing switch 7 is "off", i.e., being designated "tool handling robot" [ ST52 in Fig. 17 ], the procedure is led to step 53.
      [ a-1 ] ; Velocities for joints of tool handling robot 2 are calculated as follows;
         The velocities V1ₜ ,V2ₜ ,V3ₜ ,V4ₜ ,V5ₜ ,V6ₜ are computed by use of actuating signals S1 , S2 , S3 , S4 , S5 , S6 generated by keys, a designated rate " r_{b} " and maximum values V1ₜ₀ , V2ₜ₀ , V3ₜ₀ , V4ₜ₀ , V5ₜ₀ , V6ₜ₀ memorized in a velocity table for "each axis manual operation" of tool handling robot 2 [ ST53 ], from equations (32).$\begin{matrix}\begin{matrix}{\text{V1}}_{\text{t}} {\text{= S1 × r}}_{\text{b}} {\text{× V1}}_{\text{t0}} \\ {\text{V2}}_{\text{t}} {\text{= S2 × r}}_{\text{b}} {\text{× V2}}_{\text{t0}} \\ {\text{V3}}_{\text{t}} {\text{= S3 × r}}_{\text{b}} {\text{× V3}}_{\text{t0}} \\ {\text{V4}}_{\text{t}} {\text{= S4 × r}}_{\text{b}} {\text{× V4}}_{\text{t0}} \\ {\text{V5}}_{\text{t}} {\text{= S5 × r}}_{\text{b}} {\text{× V5}}_{\text{t0}} \\ {\text{V6}}_{\text{t}} {\text{= S6 × r}}_{\text{b}} {\text{× V6}}_{\text{t0}}\end{matrix}\end{matrix}$
         The above-mentioned S1, S2 , · · · , S6 are as follows;
         pressing each of keys 12a ∼ 12f produces a signal "+1" respectively,
         pressing each of keys 12A ∼ 12F produces a signal "-1" respectively, releasing each of keys 12a ∼ 12f, 12A ∼ 12F produces a signal "0" respectively.
         Since keys 12a and 12c only are pressed in this example, similar to the above-mentiond example,${\text{V2}}_{\text{t}} {\text{= 0, V4}}_{\text{t}} {\text{= 0, V5}}_{\text{t}} {\text{= 0, V6}}_{\text{t}} \text{= 0.}$
      [ a-2 ] ; "Joint variables" θ₁₋₀, θ₂₋₀, · · · · , θ₆₋₀ of tool handling robot 2 at the starting time of manual teaching operations are inputted [ ST54 ].
      [ a-3 ] ; Setting up i.e., i = 0, and a lapse of time Δt₋ᵢ from the starting time of manual operations is set up equal to "0" [ ST55].
   [ b ] : The second process is as follows;
      The discrimination of whether keys 12a and 12c previously pressed have been released or not, i.e., whether actuating signals are maintained or not, is carried out [ ST56 in Fig. 18 ]. If all of actuating signals are maintained, a infinitesimal time of ΔT is added to the lapse of time Δ t₋ᵢ [ ST57, ST58 ], and carrying out the third process is commanded after the lapse of time is replaced with Δt₋ᵢ₊₁. If all of keys 12a and 12c have been already released [ ST59 ], the teaching operation is ternimated [ ST60 ]. If keys have been pressed are different from previous ones, i.e., the keys 12a and 12D have been already pressed instead of keys 12a and 12c [ ST59 ], the procedure is repeated from step 1 by use of new actuating signals thereof.
   [ c ] : The third process is as follows; This is carrying out by receiving the command from the second process.
      "Joint variables" θ₁₋ᵢ , θ₂₋ᵢ , · · · , θ₆₋ᵢ of tool handling robot 2 after the lapse of time Δt₋₁, i.e., after ΔT × i, are calculated [ ST61 ].$\begin{matrix}\begin{matrix}{\text{θ}}_{\text{1-i}} {\text{= θ}}_{\text{1-o}} {\text{+ V1}}_{\text{t}} {\text{× Δt}}_{\text{-i}} \\ {\text{θ}}_{\text{2-i}} {\text{= θ}}_{\text{2-o}} {\text{+ V2}}_{\text{t}} {\text{× Δt}}_{\text{-i}} \\ {\text{θ}}_{\text{3-i}} {\text{= θ}}_{\text{3-o}} {\text{+ V3}}_{\text{t}} {\text{× Δt}}_{\text{-i}} \\ {\text{θ}}_{\text{4-i}} {\text{= θ}}_{\text{4-o}} {\text{+ V4}}_{\text{t}} {\text{× Δt}}_{\text{-i}} \\ {\text{θ}}_{\text{5-i}} {\text{= θ}}_{\text{5-o}} {\text{+ V5}}_{\text{t}} {\text{× Δt}}_{\text{-i}} \\ {\text{θ}}_{\text{6-i}} {\text{= θ}}_{\text{6-o}} {\text{+ V6}}_{\text{t}} {\text{× Δt}}_{\text{-i}}\end{matrix}\end{matrix}$
      Such "joint variables" θ₁₋ᵢ , θ₂₋ᵢ , · · · , θ₆₋ᵢ of tool handling robot 2 are transformed into actuating values aₜ₂₋ᵢ , a_{t2 -i}, · · · · , aₜ₆₋ᵢ for actuators thereof by use of following equations (101B) [ ST62 ], which are outputted just after the lapse of time comes into Δt₋ᵢ [ ST63, ST64 ], and the procedure is returned to the second process.$\begin{matrix}\begin{matrix}{\text{a}}_{\text{t1-i}} {\text{= θ}}_{\text{1-i}} {\text{/ R}}_{\text{t1}} \\ {\text{a}}_{\text{t2-i}} {\text{= θ}}_{\text{2-i}} {\text{/ R}}_{\text{t2}} \\ {\text{a}}_{\text{t3-i}} {\text{= θ}}_{\text{3-i}} {\text{/ R}}_{\text{t3}} \\ {\text{a}}_{\text{t4-i}} {\text{= θ}}_{\text{4-i}} {\text{/ R}}_{\text{t4}} \\ {\text{a}}_{\text{t5-i}} {\text{= θ}}_{\text{5-i}} {\text{/ R}}_{\text{t5}} \\ {\text{a}}_{\text{t6-i}} {\text{= θ}}_{\text{6-i}} {\text{/ R}}_{\text{t6}}\end{matrix}\end{matrix}$
      This equation (101B) is the same with equation (101) mentioned above.
[ 2 ] The operation of changing position and attitude of workpiece 1m into desired position and attitude thereof by means of actuating joints of workpiece handling robot 1 is as follows. This procedure is the same with that of changing position and attitude of tool 2n into desired position and attitude thereof by means of actuating joints of tool handling robot 2, which has been described in section [ 1 ].
   An operator chooses "workpiece handling robot" in the robot changing switch 7, "mode of each axis manual operation" in the mode changing switch 8 and "sole-action" in the operation changing switch 9 on teach pendant 3. Moreover, a desired rate "r", e.g., 0.5, which is indicated as "r_{c} " is chosen in the rate changing switch 10.
   An operator presses desired keys, e.g., 12A and 12d. The procedure till they will be released are as follows;
   [ a ] : The first process consists of following [ a-1 ] to [ a-3 ].
      Actuating signals are picked up to control equipment by means of pressing keys 12A and 12d [ ST1 in Fig. 7 ]. As the operation changing switch 9 is "off", i.e., being selected "sole-action" [ ST2 ], the mode changing switch 8 is "off", i.e., being selected "mode of each axis manual operation" [ ST51 ], and the robot changing switch 7 is "on", i.e., being designated "workpiece handling robot" [ ST52 in Fig. 17], the procedure is led to step 65.
      [ a-1 ]; Velocities for joints of workpiece handling robot 1 are calculated as follows;
         The velocities V1_{w} ,V2_{w} ,V3_{w} ,V4_{w} ,V5_{w} ,V6_{w} are computed by use of actuating signals S1, S2, S3, S4, S5, S6 generated by keys, a designated rate r_{c} " and maximum values V1_{w0} , V2_{w0} , V 3_{w0} , V4_{w0} , V5_{w0} , V6_{w0} memorized in a velocity table for "each axis manual operation" of workpiece handling robot 1 [ ST65 ], from equation (23C) which is the same with the above-mentioned equation (23).$\begin{matrix}\begin{matrix}{\text{V1}}_{\text{w}} {\text{= S1 × r}}_{\text{c}} {\text{× V1}}_{\text{w0}} \\ {\text{V2}}_{\text{w}} {\text{= S2 × r}}_{\text{c}} {\text{× V2}}_{\text{w0}} \\ {\text{V3}}_{\text{w}} {\text{= S3 × r}}_{\text{c}} {\text{× V3}}_{\text{w0}} \\ {\text{V4}}_{\text{w}} {\text{= S4 × r}}_{\text{c}} {\text{× V4}}_{\text{w0}} \\ {\text{V5}}_{\text{w}} {\text{= S5 × r}}_{\text{c}} {\text{× V5}}_{\text{w0}} \\ {\text{V6}}_{\text{w}} {\text{= S6 × r}}_{\text{c}} {\text{× V6}}_{\text{w0}}\end{matrix}\end{matrix}$
         The above-mentioned S1, S2 , · · · , S6 are as follows;
         pressing each of keys 12a ∼ 12f produces a signal "+1" respectively,
         pressing each of keys 12A ∼ 12F produces a signal "-1" respectively,
         releasing each of keys 12a ∼ 12f, 12A ∼ 12F produces a signal "0" respectively.

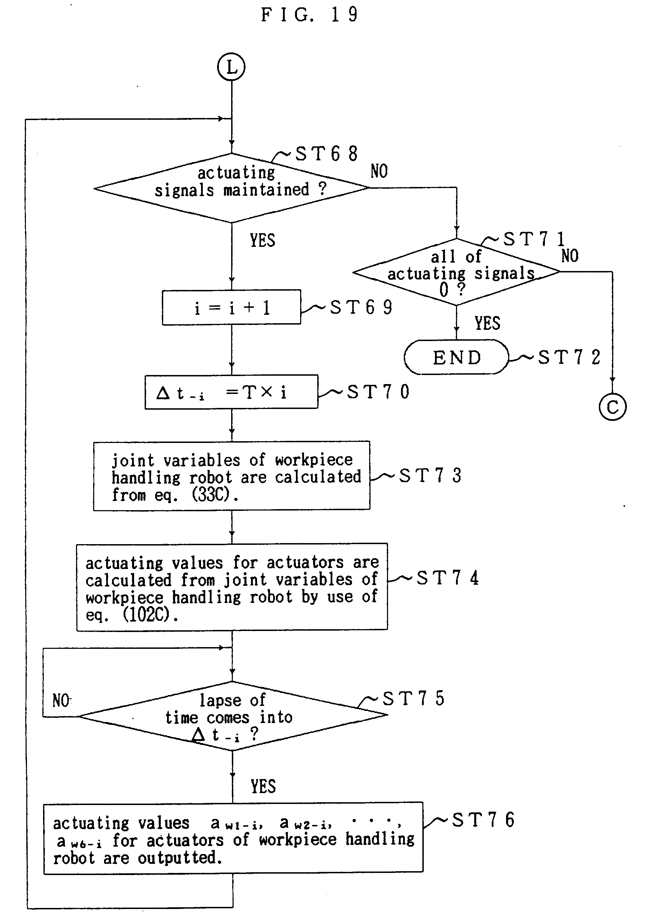

         Since keys 12A and 12d only are pressed in this example, similar to the above-mentiond example,${\text{V2}}_{\text{w}} {\text{= 0, V3}}_{\text{w}} {\text{= 0, V5}}_{\text{w}} {\text{= 0, V6}}_{\text{w}} \text{= 0.}$
      [ a-2 ] ; "Joint variables" φ₁₋₀, φ₂₋₀, · · · · , φ₆₋₀ of workpiece handling robot 1 at the starting time of manual teaching operations are inputted [ ST66 ].
      [ a-3 ] ; Setting up i = 0, and a lapse of time Δt₋ᵢ from the starting time of manual operations is set up equal to "0" [ ST67 ].
   [ b ] : The second process is as follows;
      The discrimination of whether keys 12A and 12d previously pressed have been released or not, i.e., whether actuating signals are maintained or not, is carried out [ ST68 in Fig. 19 ]. If all of actuating signals are maintained, a infinitesimal time of Δ T is added to the lapse of time Δt₋ᵢ [ ST69, ST70 ], and carrying out the third process is commanded after the lapse of time is replaced with Δt₋ᵢ₊₁. If all of keys 12A and 12d have been already released [ ST71 ], the teaching operation is ternimated [ ST72 ]. If keys have been pressed are different from previous ones, i.e., the keys 12a and 12d have been already pressed instead of keys 12A and 12d [ ST71 ], the procedure is repeated from step 1 by use of new actuating signals thereof.
   [ c ] : The third process is as follows; This is carrying out by receiving the command from the second process.
      "Joint variables" φ₁₋ᵢ , φ₂₋ᵢ , · · · , φ₆₋ᵢ of workpiece handling robot 1 after the lapse of time Δt₋ᵢ, i.e., after ΔT × i, are calculated [ ST73 ].$\begin{matrix}\begin{matrix}{\text{φ}}_{\text{1-i}} {\text{= φ}}_{\text{1-o}} {\text{+ V1}}_{\text{t}} {\text{× Δt}}_{\text{-i}} \\ {\text{φ}}_{\text{2-i}} {\text{= φ}}_{\text{2-o}} {\text{+ V2}}_{\text{t}} {\text{× Δt}}_{\text{-i}} \\ {\text{φ}}_{\text{3-i}} {\text{= φ}}_{\text{3-o}} {\text{+ V3}}_{\text{t}} {\text{× Δt}}_{\text{-i}} \\ {\text{φ}}_{\text{4-i}} {\text{= φ}}_{\text{4-o}} {\text{+ V4}}_{\text{t}} {\text{× Δt}}_{\text{-i}} \\ {\text{φ}}_{\text{5-i}} {\text{= φ}}_{\text{5-o}} {\text{+ V5}}_{\text{t}} {\text{× Δt}}_{\text{-i}} \\ {\text{θ}}_{\text{6-i}} {\text{= φ}}_{\text{6-o}} {\text{+ V6}}_{\text{t}} {\text{× Δt}}_{\text{-i}}\end{matrix}\end{matrix}$
      This equation (33C) is the same with equation (33) mentioned above.
      Such "joint variables" φ₁₋ᵢ , φ₂₋ᵢ , · · · , φ₆₋ᵢ of workpiece handling robot 1 are transformed into actuating values a_{w1-i} , a_{w2-i}, · · · · , a_{w6-i} for actuators thereof by use of following equations (102C) [ ST74 ], which are outputted just after the lapse of time comes into Δt₋ᵢ [ ST75, ST76 ], and the procedure is returned to the second process.$\begin{matrix}\begin{matrix}{\text{a}}_{\text{w1-i}} {\text{= φ}}_{\text{1-i}} {\text{/ R}}_{\text{w1}} \\ {\text{a}}_{\text{w2-i}} {\text{= φ}}_{\text{2-i}} {\text{/ R}}_{\text{w2}} \\ {\text{a}}_{\text{w3-i}} {\text{= φ}}_{\text{3-i}} {\text{/ R}}_{\text{w3}} \\ {\text{a}}_{\text{w4-i}} {\text{= φ}}_{\text{4-i}} {\text{/ R}}_{\text{w4}} \\ {\text{a}}_{\text{w5-i}} {\text{= φ}}_{\text{5-i}} {\text{/ R}}_{\text{w5}} \\ {\text{a}}_{\text{w6-i}} {\text{= φ}}_{\text{6-i}} {\text{/ R}}_{\text{w6}}\end{matrix}\end{matrix}$
      This equation (102C) is the same with equation (102) mentioned above.

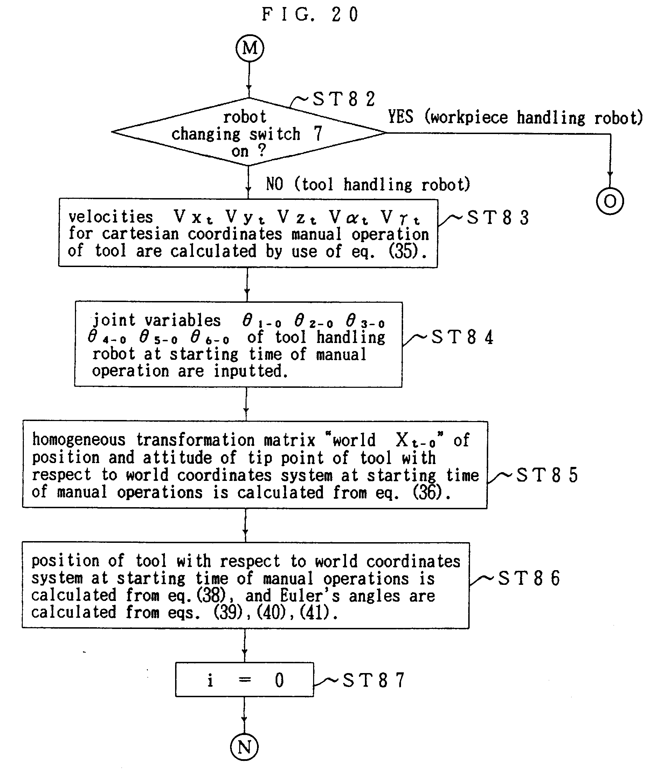

   Next, "sole-acting cartesian coordinates manual operation" is described below:
[ 3 ] The operation of changing position and attitude of tool 2n into desired position and attitude thereof with respect to the world coordinates system 51 by means of actuating joints of tool handling robot 2 is as follows;
   An operator chooses "tool handling robot" in the robot changing switch 7, "mode of cartesian coordinates manual operation" in the mode changing switch 8 and "sole-action" in the operation changing switch 9 on teach pendant 3. Moreover, a desired rate "r", e.g., 0.2, which is indicated as "r_{b"} is chosen in the rate changing switch 10.
   An operator presses desired keys, e.g., 12b and 12c. The procedure till they will be released are as follows;
   [ a ] : The first process consists of following [ a-1 ] to [ a-3 ].
      Actuating signals are inputted to control equipment by means of pressing keys 12b and 12c [ ST1 in Fig. 7 ]. As the operation changing switch 9 is "off", i.e., being selected "sole-action" [ ST2 ], the mode changing switch 8 is "on", i.e., being selected "mode of cartesian coordinates manual operation" [ ST51 ], and the robot changing switch 7 is "off", i.e., being designated "tool handling robot" [ ST82 in Fig. 20 ], the procedure is led to step 83.
      [ a-1 ]; Velocities for translation and rotation of tool 2n in the world coordinates system 51 are calculated as follows;
         The velocities Vxₜ ,Vyₜ ,Vzₜ ,Vαₜ ,Vβₜ ,Vγₜ are computed by use of actuating signals Sx , Sy , Sz , Sα , Sβ , Sγ generated by the keys, a designated rate "r_{b} " and the maximum values Vxₜ₀ , Vyₜ₀ , Vzₜ₀ , Vαₜ₀ , Vβₜ₀ , Vγₜ₀ memorized in a velocity table for "cartesian coordinates manual operation" of tool 2n [ ST83 ], from equations (35).$\begin{matrix}\begin{matrix}{\text{Vx}}_{\text{t}} {\text{= Sx × r}}_{\text{b}} {\text{× Vx}}_{\text{t0}} \\ {\text{Vy}}_{\text{t}} {\text{= Sy × r}}_{\text{b}} {\text{× Vy}}_{\text{t0}} \\ {\text{Vz}}_{\text{t}} {\text{= Sz × r}}_{\text{b}} {\text{× Vz}}_{\text{t0}} \\ {\text{Vα}}_{\text{t}} {\text{= Sα × r}}_{\text{b}} {\text{× Vα}}_{\text{t0}} \\ {\text{Vβ}}_{\text{t}} {\text{= Sβ × r}}_{\text{b}} {\text{× Vβ}}_{\text{t0}} \\ {\text{Vγ}}_{\text{t}} {\text{= Sγ × r}}_{\text{b}} {\text{× Vγ}}_{\text{t0}}\end{matrix}\end{matrix}$
         The above-mentioned Sx, Sy , · · · ,Sγ are as follows;
         pressing each of keys 12a ∼ 12f produces a signal "+1" for each output;
         pressing each of keys 12A ∼ 12F produces a signal "-1" for each output; releasing each of keys 12a ∼ 12f, 12A ∼ 12F produces a signal
         "0" for each output.

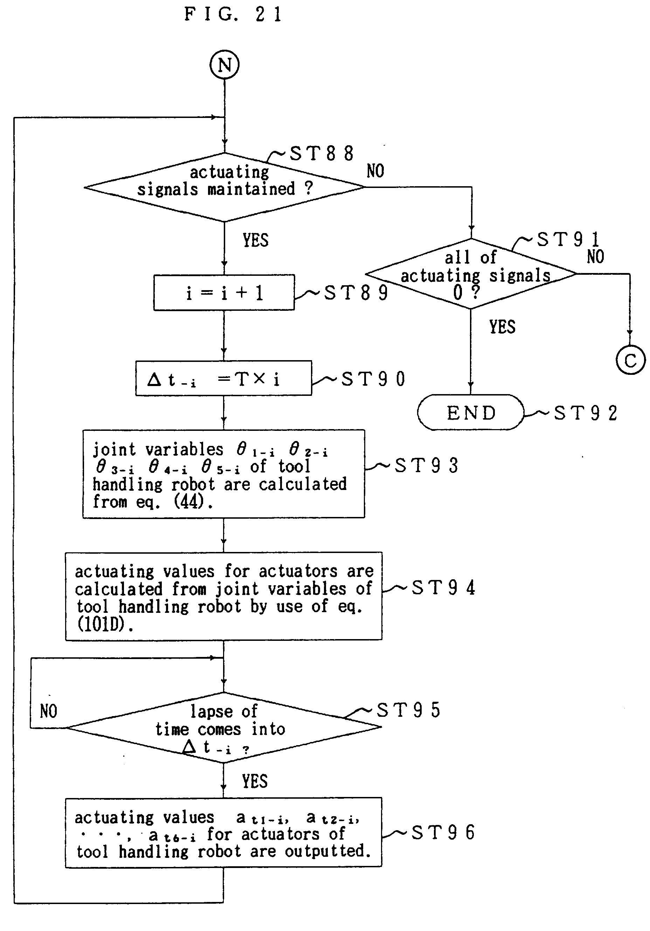

         Since the key 12b and 12c only are pressed in this example, similar to the above-mentioned example,${\text{Vx}}_{\text{t}} {\text{= 0, Vα}}_{\text{t}} {\text{= 0, Vβ}}_{\text{t}} {\text{= 0, Vγ}}_{\text{t}} \text{= 0.}$
      [ a-2 ] ; "Joint variables" θ₁₋₀, θ₂₋₀, · · · · , θ₆₋₀ of tool handling robot 2 at the starting time of manual teaching operations are inputted [ ST84 ]. And a homogeneous transformation matrix " world Xₜ₋ₒ " of position and attitude of the tip point 57 of tool 2n with respect to the world coordinates system 51 is calculated as a following equation [ ST85 ].${\text{world X}}_{\text{t-o}} {\text{= Z}}_{\text{t}} {\text{· T}}_{\text{2-0}} {\text{· E}}_{\text{t}}$
         Equation (36) is formulated as a following equation. 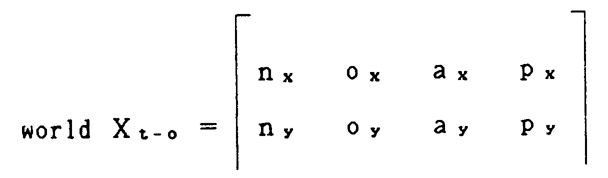 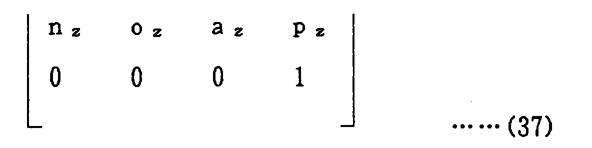
         By transforming the above equations, the data for position X ₜ₋ₒ, Yₜ₋ₒ , Zₜ₋ₒ and the data of Euler's angles αₜ₋ₒ , βₜ₋ₒ , γₜ₋ₒ for attitude of the tip point 57 of tool 2n with respect to the world coordinates system 51 at the starting time of manual operations are obtained. The 6 equivalent parameters are calculated by following equations . 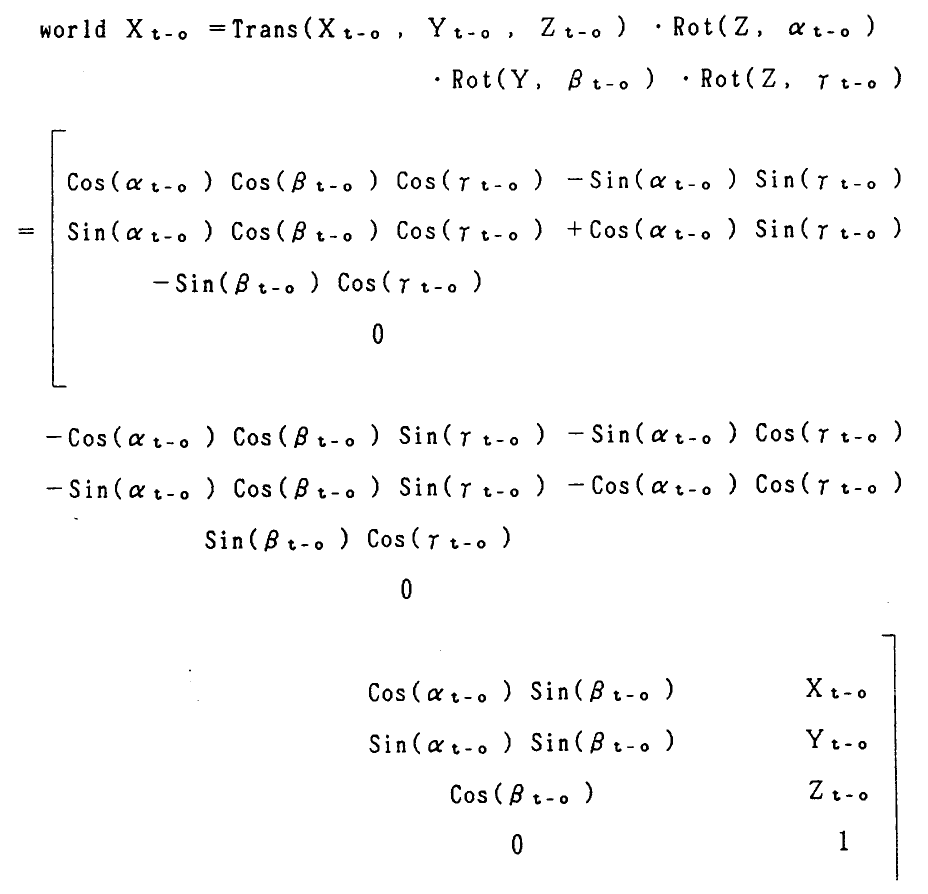 $\begin{matrix}\begin{matrix}\begin{matrix}{\text{X}}_{\text{t-o}} {\text{= p}}_{\text{x}} {\text{, Y}}_{\text{t-o}} {\text{= p}}_{\text{y}} {\text{, Z}}_{\text{t-o}} {\text{= p}}_{\text{z}}\end{matrix} \\ \begin{matrix}{\text{α}}_{\text{t-o}} {\text{= Cos}}^{\text{-1}} {\text{(a}}_{\text{x}} {\text{/ Sin(β}}_{\text{t-o}} \text{) )}\end{matrix} \\ \begin{matrix}{\text{β}}_{\text{t-o}} {\text{= Cos}}^{\text{-1}} {\text{(a}}_{\text{z}} \text{)}\end{matrix} \\ \begin{matrix}{\text{γ}}_{\text{t-o}} {\text{= Sin}}^{\text{-1}} {\text{(o}}_{\text{z}} {\text{/ Sin(β}}_{\text{t-o}} \text{) )}\end{matrix}\end{matrix}\end{matrix}$
         By use of these equations (38), (39), (40) and (41), position and attitude of tool 2n are calculated [ ST86 ].
      [ a-3 ] ; Setting up i = 0, and a lapse of time Δt₋ᵢ from the starting time of manual operations is set up equal to "0" [ ST87 ].
   [ b ] : The second process is as follows;
      The discrimination of whether the keys 12b and 12c previously pressed have been released or not, i.e., whether the actuating signals are maintained or not, is carried out [ ST88 in Fig. 21 ]. If all of actuating signals are maintained, a infinitesimal time ΔT is added to the lapse of time Δt₋ᵢ [ ST89, ST90 ], and carrying out the third process is commanded after the lapse of time is replaced with Δt₋ᵢ₊₁. If all of the keys 12b and 12c have been already released [ ST91 ], the teaching operation is terminated [ ST92 ]. If the keys have been pressed are different from previous ones, i.e., the keys 12C and 12F have been already pressed instead of the keys 12b and 12c [ ST91 ], the procedure is repeated from step 1 by use of new actuating signals thereof.
   [ c ] : The third process is as follows; This is carrying out by receiving the command from the second process.
      Position Xₜ₋ᵢ , Yₜ₋ᵢ , Zₜ₋ᵢ and Euler's angle αₜ₋ᵢ , βₜ₋ ᵢ , γₜ₋ᵢ of the attitude of the tip point 57 of tool 2n with respect to the world coordinates system 51 after the lapse of time Δt₋₁, i.e., after ΔT × i, are calculated.$\begin{matrix}\begin{matrix}{\text{X}}_{\text{t-i}} {\text{= X}}_{\text{t-o}} {\text{+ Vx}}_{\text{t}} {\text{× Δt}}_{\text{-i}} \\ {\text{Y}}_{\text{t-i}} {\text{= Y}}_{\text{t-o}} {\text{+ Vy}}_{\text{t}} {\text{× Δt}}_{\text{-i}} \\ {\text{Z}}_{\text{t-i}} {\text{= Z}}_{\text{t-o}} {\text{+ Vz}}_{\text{t}} {\text{× Δt}}_{\text{-i}} \\ {\text{α}}_{\text{t-i}} {\text{= α}}_{\text{t-o}} {\text{+ Vα}}_{\text{t}} {\text{× Δt}}_{\text{-i}} \\ {\text{β}}_{\text{t-i}} {\text{= β}}_{\text{t-o}} {\text{+ Vβ}}_{\text{t}} {\text{× Δt}}_{\text{-i}} \\ {\text{γ}}_{\text{t-i}} {\text{= γ}}_{\text{t-o}} {\text{+ Vγ}}_{\text{t}} {\text{× Δt}}_{\text{-i}}\end{matrix}\end{matrix}$
      A homogeneous transformation matrix " world Xₜ₋ᵢ " of position and attitude of the tip point 57 of tool is calculated as a following equation.${\text{world X}}_{\text{t-i}} {\text{= Trans(X}}_{\text{t-i}} {\text{, Y}}_{\text{t-i}} {\text{, Z}}_{\text{t-i}} {\text{) · Rot(Z, α}}_{\text{t-i}} {\text{) · Rot(Y, β}}_{\text{t-i}} {\text{) · Rot(Z, γ}}_{\text{t-i}} \text{)}$
      Since position and attitude T₂₋ᵢ of tool handling robot 2 is expressed as a following equation (44) similar to above-mentioned equation (20), "joint variables" θ₁₋ᵢ , θ₂₋ᵢ , · · · , θ₆₋ᵢ of tool handling robot 2 are obtained [ ST93 ].${\text{T}}_{\text{2-i}} {\text{= (Z}}_{\text{t}} {\text{)}}^{\text{-1}} {\text{· world X}}_{\text{w-i}} {\text{· wX}}_{\text{t}} {\text{· (E}}_{\text{t}} {\text{)}}^{\text{-1}}$
      Such "joint variables" θ₁₋ᵢ , θ₂₋ᵢ , · · · , θ₆₋ᵢ of tool handling robot 2 are transformed into actuating values aₜ₁₋ᵢ , a_{t2 -i}, · · · · , aₜ₆₋ᵢ for actuators thereof by use of following equations (101D) [ ST94 ], which are outputted just after the lapse of time comes into Δt₋ᵢ [ ST95, ST96], and the procedure is returned to the second process.$\begin{matrix}\begin{matrix}{\text{a}}_{\text{t1-i}} {\text{= θ}}_{\text{1-i}} {\text{/ R}}_{\text{t1}} \\ {\text{a}}_{\text{t2-i}} {\text{= θ}}_{\text{2-i}} {\text{/ R}}_{\text{t2}} \\ {\text{a}}_{\text{t3-i}} {\text{= θ}}_{\text{3-i}} {\text{/ R}}_{\text{t3}} \\ {\text{a}}_{\text{t4-i}} {\text{= θ}}_{\text{4-i}} {\text{/ R}}_{\text{t4}} \\ {\text{a}}_{\text{t5-i}} {\text{= θ}}_{\text{5-i}} {\text{/ R}}_{\text{t5}} \\ {\text{a}}_{\text{t6-i}} {\text{= θ}}_{\text{6-i}} {\text{/ R}}_{\text{t6}}\end{matrix}\end{matrix}$
      This equation (101D) is the same with equation (101) mentioned above.
[ 4 ] The operation of changing position and attitude of workpiece 1m into desired position and attitude thereof with respect to the world coordinates system 51 by means of actuating joints of workpiece handling robot 1 is as follows; An operator chooses "workpiece handling robot" in the robot changing switch 7, "mode of cartesian coordinates manual operation" in the mode changing switch 8 and "sole-action" in the operation changing switch 9 on teach pendant 3. This means "sole-acting cartesian coordinates manual operation of workpiece handling robot". Moreover, a desired rate "r", e.g., 0.5, which is indicated as "r_{c} " is chosen in the rate changing switch 10.
   An operator presses desired keys, e.g., 12a and 12c. The procedure till they will be released are as follows;
   [ a ] : The first process consists of following [ a-1 ] to [ a-3 ].
      Actuating signals are taken into control equipment by means of pressing keys 12a and 12c [ ST1 in Fig. 7 ]. As the operation changing switch 9 is "off", i.e., being selected "sole-action" [ ST2 ], the mode changing switch 8 is "on", i.e., being selected "mode of cartesian coordinates manual operation" [ ST51 ], and the robot changing switch 7 is "on", i.e., being designated "workpiece handling robot" [ ST82 in Fig. 20 ], the procedure is led to step 100 in Fig. 20.
      A workpiece handling robot 1 may be a manipulator of 6 degrees of freedom or a positioner of less than 3 degrees of freedom. A manipulator of 6 degrees of freedom only is, however, applied to the control in this embodiment of the present invention, therefore, in step 100 it is discriminated whether workpiece handling robot 1 is a manipulator of 6 degrees of freedom or not.
      As the degree of freedom of workpiece handling robot 1 is previously stored in the "control means for manual teaching operations" 4A, the discrimination of whether workpiece handling robot 1 is 6 degrees of freedom is carried out by means of said stored signal. If workpiece handling robot 1 is a positioner, a message that the procedure for controlling later is impossible is indicated in an undrawn CRT etc. [ ST101 ], the procedure is terminated at that time [ST102 ]. If workpiece handling robot 1 is 6 degrees of freedom [ ST100 ], the procedure is led to step 103.
      [ a-1 ]; Velocities for translation and rotation of workpiece 1m in the world coordinates system 51 are calculated as follows;
         The velocities Vx_{w} ,Vy_{w} ,Vz_{w} ,Vα_{w} ,Vβ_{w} ,Vγ_{w} are computed by use of actuating signals Sx , Sy , Sz , Sα , Sβ , Sγ generated by the keys, a designated rate "r_{c} " and the maximum values Vx_{w0} , Vy_{w0} , Vz_{w0} , Vα_{w0} , Vβ_{w0} , Vγ_{w0} memorized in a velocity table for "cartesian coordinates manual operation" of workpiece 1m [ ST103 ], from equations (45).$\begin{matrix}\begin{matrix}{\text{Vx}}_{\text{w}} {\text{= Sx × r}}_{\text{c}} {\text{× Vx}}_{\text{w0}} \\ {\text{Vy}}_{\text{w}} {\text{= Sy × r}}_{\text{c}} {\text{× Vy}}_{\text{w0}} \\ {\text{Vz}}_{\text{w}} {\text{= Sz × r}}_{\text{c}} {\text{× Vz}}_{\text{w0}} \\ {\text{Vα}}_{\text{w}} {\text{= Sα × r}}_{\text{c}} {\text{× Vα}}_{\text{w0}} \\ {\text{Vβ}}_{\text{w}} {\text{= Sβ × r}}_{\text{c}} {\text{× Vβ}}_{\text{w0}} \\ {\text{Vγ}}_{\text{w}} {\text{= Sγ × r}}_{\text{c}} {\text{× Vγ}}_{\text{w0}}\end{matrix}\end{matrix}$
         The above-mentioned Sx, Sy , · · · ,Sγ are as follows;
         pressing each of keys 12a ∼ 12f produces a signal "+1" for each output;
         pressing each of keys 12A ∼ 12F produces a signal "-1" for each output;
         releasing each of keys 12a ∼ 12f, 12A ∼ 12F produces a signal "0" for each output.

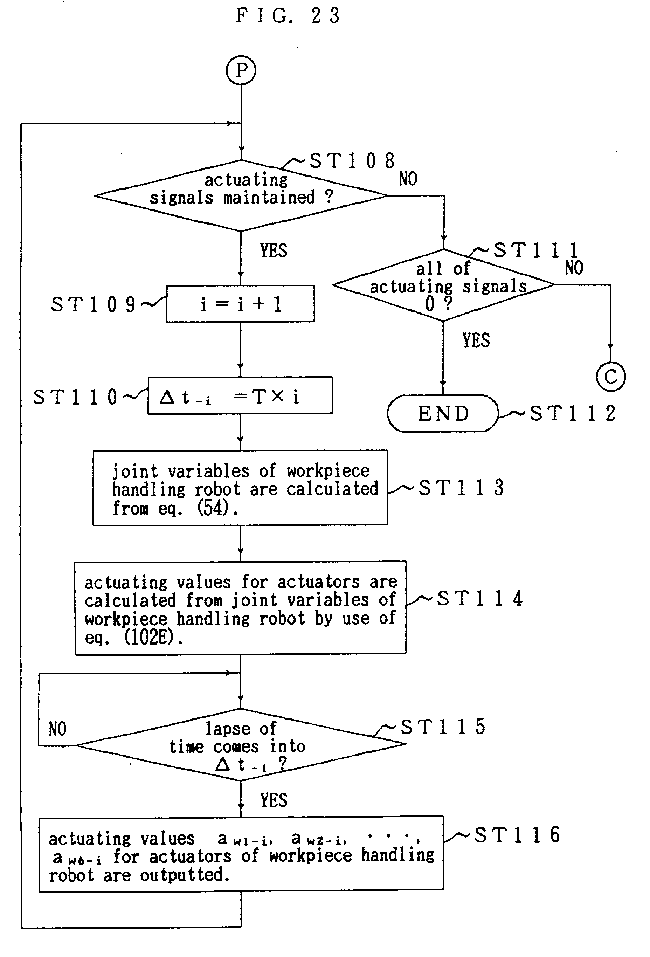

         Since the keys 12a and 12c only are pressed in this example, similar to the above-mentioned example,${\text{Vy}}_{\text{w}} {\text{= 0, Vα}}_{\text{w}} {\text{= 0, Vβ}}_{\text{w}} {\text{= 0, Vγ}}_{\text{w}} \text{= 0.}$
      [ a-2 ] ; "Joint variables" φ₁₋₀, φ₂₋₀, · · · · , φ₆₋₀ of workpiece handling robot 1 at the starting time of manual teaching operations are inputted [ ST104 ]. And a homogeneous transformation matrix " world X_{w-o} " of position and attitude of the referential point 56 of workpiece 1m with respect to the world coordinates system 51 is calculated as a following equation [ ST105 ].${\text{world X}}_{\text{w-o}} {\text{= Z}}_{\text{w}} {\text{· T}}_{\text{2-0}} {\text{· E}}_{\text{w}}$
         Equation (46) is formulated as a following equation. 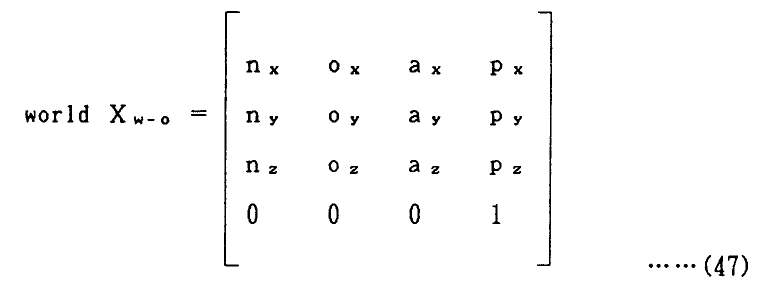
         By transforming the above equations, the data for position X _{w-o ,} Y_{w-o} , Z_{w-o} and the data of Euler's angles α_{w-o} , β_{w-o} , γ_{w-o} for attitude of the tip referential point 56 of workpiece 1m with respect to the world coordinates system 51 at the starting time of manual operations are obtained. The 6 equivalent parameters are calculated by following equations . 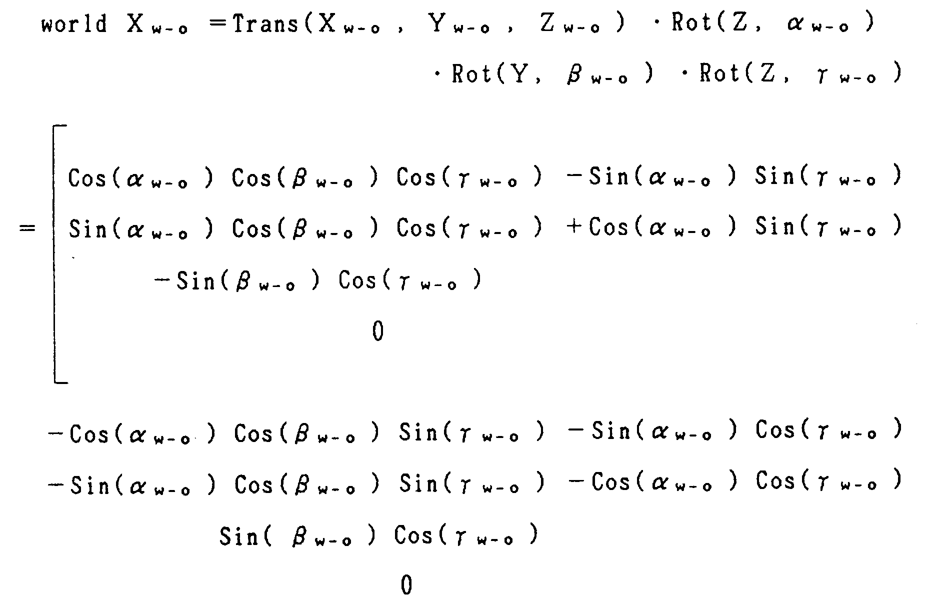 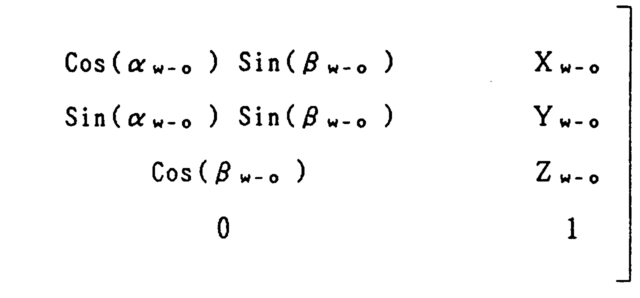 $\begin{matrix}\begin{matrix}\begin{matrix}{\text{X}}_{\text{w-o}} {\text{= p}}_{\text{x}} {\text{, Y}}_{\text{w-o}} {\text{= p}}_{\text{y}} {\text{, Z}}_{\text{w-o}} {\text{= p}}_{\text{z}}\end{matrix} \\ \begin{matrix}{\text{α}}_{\text{w-o}} {\text{= Cos}}^{\text{-1}} {\text{(a}}_{\text{x}} {\text{/ Sin(β}}_{\text{w-o}} \text{) )}\end{matrix} \\ \begin{matrix}{\text{β}}_{\text{w-o}} {\text{= Cos}}^{\text{-1}} {\text{(a}}_{\text{z}} \text{)}\end{matrix} \\ \begin{matrix}{\text{γ}}_{\text{w-o}} {\text{= Sin}}^{\text{-1}} {\text{(o}}_{\text{z}} {\text{/ Sin(β}}_{\text{w-o}} \text{) )}\end{matrix}\end{matrix}\end{matrix}$
         By use of these equations (48), (49), (50) and (51), position and attitude of workpiece 1m are calculated [ ST106 ].
      [ a-3 ] ; Setting up i = 0, and a lapse of time Δt₋ᵢ from the starting time of manual operations is set up equal to "0" [ ST107 ].
   [ b ] : The second process is as follows;
      The discrimination of whether the keys 12a and 12c previously pressed have been released or not, i.e., whether the actuating signals are maintained or not, is carried out [ ST108 in Fig. 23 ]. If all of actuating signals are maintained, a infinitesimal time ΔT is added to the lapse of time Δt₋ᵢ [ ST109, ST110 ], and carrying out the third process is commanded after the lapse of time is replaced with Δt₋ᵢ₊₁. If all of the keys 12a and 12c have been already released [ ST111 ], the teaching operation is terminated [ ST112 ]. If the keys have been pressed are different from previous ones, i.e., the keys 12a, 12c and 12E have been already pressed instead of the keys 12a and 12c [ ST111 ], the procedure is repeated from step 1 by use of new actuating signals thereof.
   [ c ] : The third process is as follows; This is carrying out by receiving the command from the second process.
      Position X_{w-i} , Y_{w-i} , Z_{w-i} and Euler's angle α_{w-i} , β_{w-i} , γ_{w-i} of the attitude of the referential point 56 of workpiece 1m with respect to the world coordinates system 51 after the lapse of time Δt₋₁, i.e., after ΔT × i, are calculated.$\begin{matrix}\begin{matrix}{\text{X}}_{\text{w-i}} {\text{= X}}_{\text{w-o}} {\text{+ Vx}}_{\text{w}} {\text{× Δt}}_{\text{-i}} \\ {\text{Y}}_{\text{w-i}} {\text{= Y}}_{\text{w-o}} {\text{+ Vy}}_{\text{w}} {\text{× Δt}}_{\text{-i}} \\ {\text{Z}}_{\text{w-i}} {\text{= Z}}_{\text{w-o}} {\text{+ Vz}}_{\text{w}} {\text{× Δt}}_{\text{-i}} \\ {\text{α}}_{\text{w-i}} {\text{= α}}_{\text{w-o}} {\text{+ Vα}}_{\text{w}} {\text{× Δt}}_{\text{-i}} \\ {\text{β}}_{\text{w-i}} {\text{= β}}_{\text{w-o}} {\text{+ Vβ}}_{\text{w}} {\text{× Δt}}_{\text{-i}} \\ {\text{γ}}_{\text{w-i}} {\text{= γ}}_{\text{w-o}} {\text{+ Vγ}}_{\text{w}} {\text{× △t}}_{\text{-i}}\end{matrix}\end{matrix}$
      A homogeneous transformation matrix " world Xₜ₋ᵢ " of position and attitude of the referential point 56 of workpiece is calculated as a following equation.${\text{world X}}_{\text{w-i}} {\text{= Trans(X}}_{\text{w-i}} {\text{, Y}}_{\text{w-i}} {\text{, Z}}_{\text{w-i}} {\text{) · Rot(Z, α}}_{\text{w-i}} {\text{) · Rot(Y, β}}_{\text{w-i}} {\text{) · Rot(Z, γ}}_{\text{w-i}} \text{)}$
      Since position and attitude W₂₋ᵢ of workpiece handling robot 1 is expressed as a following equation (54) similar to above-mentioned equation (22), "joint variables" φ₁₋ᵢ , φ₂₋ᵢ , · · · , φ₆₋ᵢ of workpiece handling robot 1 are obtained [ ST113 ].${\text{W}}_{\text{2-i}} {\text{= (Z}}_{\text{w}} {\text{)}}^{\text{-1}} {\text{· world X}}_{\text{w-i}} {\text{· (E}}_{\text{w}} {\text{)}}^{\text{-1}}$
      Such joint variables φ₁₋ᵢ , φ₂₋ᵢ , · · · , φ₆₋ᵢ of workpiece handling robot 1 are transformed into actuating values a_{w1-i} , a_{w2-i}, · · · · , a_{w6-i} for actuators thereof by use of following equations (102E) [ ST114 ], which are outputted just after the lapse of time comes into Δt₋ᵢ [ ST115, ST116 ], and the procedure is returned to the second process.$\begin{matrix}\begin{matrix}{\text{a}}_{\text{w1-i}} {\text{= φ}}_{\text{1-i}} {\text{/ R}}_{\text{w1}} \\ {\text{a}}_{\text{w2-i}} {\text{= φ}}_{\text{2-i}} {\text{/ R}}_{\text{w2}} \\ {\text{a}}_{\text{w3-i}} {\text{= φ}}_{\text{3-i}} {\text{/ R}}_{\text{w3}} \\ {\text{a}}_{\text{w4-i}} {\text{= φ}}_{\text{4-i}} {\text{/ R}}_{\text{w4}} \\ {\text{a}}_{\text{w5-i}} {\text{= φ}}_{\text{5-i}} {\text{/ R}}_{\text{w5}} \\ {\text{a}}_{\text{w6-i}} {\text{= φ}}_{\text{6-i}} {\text{/ R}}_{\text{w6}}\end{matrix}\end{matrix}$
      This equation (102E) is the same with equation (102) mentioned above.

In above-mentioned "co-acting cartesian coordinates manual operations", the world coordinates system is applied to the coordinates system in order to regulate movement of axial directions of each axis or rotation around each axis in the cartesian coordinates relating to position and attitude of workpiece handling robot 1. The coordinates system at the base point 52 of the workpiece handling robot 1 as shown in Fig. 5 may be applied to the coordinates system related to the present invention instead of the world coordinates system.

In such case, equations (6), (7), (8), (9) and (10) in the first process are replaced with following ones.

A homogeneous transformation matrix " _{w1}X_{w-o} " of position and attitude of the referential point 56 of workpiece with respect to the base point 52 of workpiece handling robot 1 is as follows;${\text{}}_{\text{w1}} {\text{X}}_{\text{w-o}} {\text{= W}}_{\text{2-0}} {\text{· E}}_{\text{w}}$ where a matrix W₂₋₀ is given by equation (3), and E_{w} is a homogeneous transformation matrix of position and attitude of the referential point 56 of workpiece with respect to the holding point 53 of workpiece 1m. The data of this E_{w} is previously stored, as an example mentioned above, in the "control means for manual teaching operations" 4A.

A homogeneous transformation matrix " _{T1}Xₜ₋ₒ " of position and attitude of the tip point 57 of tool 2n with respect to the base point 54 of tool handling robot 2 is as follows;${\text{}}_{\text{T1}} {\text{X}}_{\text{t-o}} {\text{= T}}_{\text{2-0}} {\text{· E}}_{\text{t}}$ where a matrix T₂₋₀ is given by equation (5), and Eₜ is a homogeneous transformation matrix of position and attitude of the tip point 57 of tool with respect to the installation point 55 of tool 2n. The data of this Eₜ is also previously stored, as an example mentioned above, in the "control means for manual teaching operations" 4A.

A following equation (8X) is formulated by use of a homogeneous transformation matrix Z_{w} of position and attitude of the base point 52 of workpiece handling robot 1 with respect to the world coordinates system as shown in Fig. 5, a homogeneous transformation matrix Zₜ of position and attitude of the base point 54 of tool handling robot 2 with respect to the world coordinates system, and a homogeneous transformation matrix wXₜ of position and attitude of the tip point 57 of tool 2n with respect to the referential point 56 of workpiece.${\text{Z}}_{\text{t}} {\text{·}}_{\text{T1}} {\text{X}}_{\text{t-o}} {\text{= Z}}_{\text{w}} {\text{·}}_{\text{w1}} {\text{X}}_{\text{w-o}} {\text{· wX}}_{\text{t}}$ Therefore, wXₜ is calculated from a following equation.${\text{wX}}_{\text{t}} {\text{= (}}_{\text{w1}} {\text{X}}_{\text{w-o}} {\text{)}}^{\text{-1}} {\text{· Z}}_{\text{w}} {}^{\text{-1}} {\text{· Z}}_{\text{t}} {\text{·}}_{\text{T1}} {\text{X}}_{\text{t-o}}$

A homogeneous transformation matrix _{w1}X_{w-o} of position and attitude of the referential point 56 of workpiece with respect to the base point 52 of workpiece handling robot 1 is as follows;

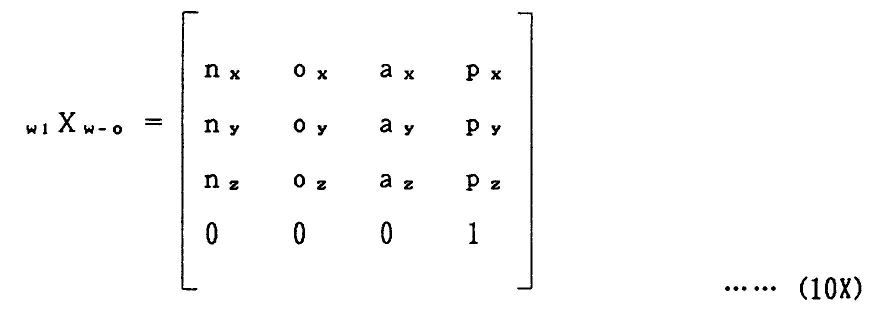

And equations (16), (17), (18), (19), (20) (21) and (22) in the third process are replaced with following ones.

A homogeneous transformation matrix _{w1}X_{w-i} of position and attitude of the referential point 56 of workpiece with respect to the base point 52 of workpiece handling robot 1 is calculated from equation (16X).${\text{}}_{\text{w1}} {\text{X}}_{\text{w-i}} {\text{= Trans(X}}_{\text{w-i}} {\text{, Y}}_{\text{w-i}} {\text{, Z}}_{\text{w-i}} {\text{) · Rot(Z, α}}_{\text{w-i}} {\text{) · Rot(Y, β}}_{\text{w-i}} {\text{) · Rot(Z, γ}}_{\text{w-i}} \text{)}$

Even if workpiece 1m acts according to equation (16X), position and attitude T₂₋ᵢ , which relative position and attitude of tool 2n against workpiece 1m are never changed, of tool handling robot 2 can be calculated as follows.

A following equation (18X) is formulated as the above-mentioned equation (8X).${\text{Z}}_{\text{t}} {\text{·}}_{\text{T1}} {\text{X}}_{\text{t-i}} {\text{= Z}}_{\text{w}} {\text{·}}_{\text{w1}} {\text{X}}_{\text{w-i}} {\text{· wX}}_{\text{t}}$ A following equation is formulated from the relation of coordinates as the above-mentioned equation (7X).${\text{}}_{\text{T1}} {\text{X}}_{\text{t-i}} {\text{= T}}_{\text{2-0}} {\text{· E}}_{\text{t}}$ From equation (18X), a following equation (19X) is formulated.${\text{T}}_{\text{2-i}} {\text{=}}_{\text{T1}} {\text{X}}_{\text{t-i}} {\text{(E}}_{\text{t}} {\text{)}}^{\text{-1}}$ Substituting equation (17X) into equation (19X) results equation (20X).${\text{T}}_{\text{2-i}} {\text{= (Z}}_{\text{t}} {\text{)}}^{\text{-1}} {\text{· Z}}_{\text{w}} {\text{·}}_{\text{w1}} {\text{X}}_{\text{w-i}} {\text{· wX}}_{\text{t}} {\text{· (E}}_{\text{t}} {\text{)}}^{\text{-1}}$

On the other hand, equation (21X) is formulated as an above-mentioned equation (6X),${\text{}}_{\text{w1}} {\text{X}}_{\text{w-i}} {\text{= W}}_{\text{2-i}} {\text{· E}}_{\text{w}}$ and a homogeneous transformation matrix W₂₋ᵢ of position and attitude of workpiece handling robot 1 can be calculated by equation (22X).${\text{W}}_{\text{2-i}} {\text{=}}_{\text{w1}} {\text{X}}_{\text{w-i}} {\text{· (E}}_{\text{w}} {\text{)}}^{\text{-1}}$

In the teaching operations by use of "co-acting manual operation", as described above, "actuating values for actuators" of the workpiece handling robot and "actuating values for actuators" of the tool handling robot are computed by means of estimating a state after a previously fixed constant infinitesmal time. When the lapse of time comes into a predetermined time, "actuating values for actuators" of the tool handling robot and "actuating values for actuators" of the workpiece handling robot are synchronously outputted, therefore, the joints of the workpiece handling robot and joints of the tool handling robot are actuated according to the output signals respectively.

As the co-action which associates the workpiece with the tool while pressing the keys is synchronously achieved, the relative position and attitude of the tool against the workpiece is always constant, which is a specific effect of the present invention. In addition, the relative position and attitude of the tool against the workpiece is stopped maintaining previous ones after releasing the keys.

When the keys are released, the robots are really stopped after the above-mentiond infinitesimal time, but the movement of workpiece and tool are not influenced if a preferable rate is selected in the rate changing switch. And the workpiece and the tool are acculately stopped at a desired position by means of movement till the vicinity of a target in a high speed and movement close to said target in a lower speed.

The rapid and simplified teaching operations are established owing to unnecessity of retiring the tool from the workpiece in order to avoid interference of the tool with the workpiece. Even if position and attitude of the workpiece are changed, relative position and attitude of the tool against the workpiece are never changed. Therefore, it becomes easy to find position and attitude of the tool against the workpiece at the last teaching point, enabling a correct teaching at a next desired point.

## Claims

1. A teaching control device for manual operations of an industrial robotic system, the robotic system including a workpiece handling robot (1) for manipulating a position and an attitude of a workpiece (1m) and a tool handling robot (2) for manipulating a position and an attitude of a tool (2n) processing said workpiece (1m), said teaching control device comprising:
selecting means (9) of sole-action/co-action for supplying a mode signal for selecting (i) a sole-acting manual mode of operation of said robotic system wherein manipulation of the position and the attitude of the workpiece (1m) by said workpiece handling robot (1) are performed independently of manipulation of the position and the attitude of the tool (2n) by said tool handling robot (2), and (ii) a coacting manual mode of operation wherein the manipulation of the position and the attitude of the tool (2n) by said tool handling robot (2) are coordinated with and independent on manipulation of the position and the attitude of the workpiece (1m) by said workpiece handling robot (1) so that the relative position and the relative attitude of the tool (2n) against the workpiece (1m) are maintained substantially constant;
selecting means (7) of a handling robot for supplying a robot signal for selecting either the workpiece handling robot (1) or the tool handling robot (2);
teaching key means (12) for supplying actuating signals for changing the position and the attitude of said workpiece (1m) or said tool (2n);
control means (4A) for co-acting teaching operations controlling said robotic system in response to said actuating signals, said robot signal selecting a workpiece handling robot (1) and said mode signal;
said control means (4A) comprising a computer performing the following steps;
(i) receiving said "actuating signals", computing "a previous position and a previous attitude of the workpiece (1m) in a preset coordinates system before receiving actuating signals" in response to "previous joint variables of said workpiece handling robot (1)" and computing "a previous relative position and a previous relative attitude of the tool (2n) against the workpiece (1m) before receiving actuating signals" in response to "previous joint variables of said workpiece handling robot (1)" and "previous joint variables of said tool handling robot (2)";
(ii) controlling execution of a calculating step in response to said actuating signals maintained for a preset time interval, controlling repetition of said computing step in response to detecting a change in said actuating signals within said preset time interval or controlling termination of said co-acting manual mode of operation in response to an absence of said actuating signals within said preset time interval;
(iii) calculating "a position and an attitude of the workpiece (1m) after a preset time interval" in response to "said actuating signals" and "said previous position and said previous attitude of the workpiece (1m) in a preset coordinates system before receiving actuating signals" calculated by said computing step and calculating "a position and an attitude of the tool (2n) after a preset time interval" in response to "said previous relative position and said previous relative attitude of the tool (2n) against the workpiece (1m) before receiving actuating signals" calculated by said computing step and "said position and said attitude of the workpiece (1m) after a preset time interval";
(iv) calculating "joint variables of the workpiece handling robot (1) after a preset time interval" in response to "a position and an attitude of the workpiece (1m) after a preset time interval" calculated by said calculating step and calculating "joint variables of the tool handling robot (2) after a preset time interval" in response to "a position and an attitude of the tool (2n) after a preset time interval" calculated by said calculating step; and
(v) calculating "actuating values (a_{w1-i}, a_{w2-i}, ··· a_{w6-i}) for actuators (17W) of the workpiece handling robot (1)" in response to "said joint variables (φ₁, φ₂, ····, φ₆) of the workpiece handling robot (1) after a preset time interval" and calculating "actuating values (aₜ₁₋ᵢ, aₜ₂₋ᵢ, ···· aₜ₆₋ᵢ) for actuators (17T) of the tool handling robot (2)" in response to "said joint variables (φ₁, φ₂, ····, φ₆) of the tool handling robot (2) after a preset time interval", and in response, simultaneously supplying control signals of actuating values (a_{w1-i}, a_{w2-i}, ··· a_{w6-i}) to actuators (17W) of the workpiece handling robot (1) and control signals of actuating values (aₜ₁₋ᵢ, aₜ₂₋ᵢ, ··· aₜ₆₋ᵢ) to actuators (17T) of the tool handling robot (2), and further commanding repetition of said controlling step.

2. A teaching control device for manual operations according to claim 1, wherein:
said actuating signals include signals commanding for linear motion of a workpiece (1m) along each axis and for revolution of a workpiece (1m) around each axis of the cartesian coordinates.

3. A teaching control device for manual operations according to claim 1, wherein:
said actuating signals include signals commanding for rotation of the joints (1a, 1b, 1c, 1d, 1e, 1f) of said workpiece handling robot (1).

## Patentansprüche

1. Lehrsteuerungsvorrichtung für manuelle Operationen eines Industrierobotersystems, wobei das Robotersystem einen Werkstückhandhaberoboter (1) zur Manipulierung der Position und Lage eines Werkstücks (1m) und einen Werkzeughandhaberoboter (2) zur Manipulierung der Position und Lage eines Werkzeugs (2n), das das Werkstück (1m) bearbeitet, aufweist, wobei die Lehrsteuerungsvorrichtung aufweist:
eine Auswähleinrichtung (9) für die Alleinwirkung/Zusammenwirkung, die ein Modussignal zum Auswählen (i) eines manuellen Alleinwirkungsbetriebsmodus des Robotersystems, wobei die Manipulation der Position und Lage des Werkstücks (1m) durch den Werkstückhandhaberoboter (1) unabhängig von der Manipulation der Position und Lage des Werkzeugs (2m) durch den Werkzeughandhaberoboter (2) ausgeführt wird, und (ii) eines manuellen Zusammenwirkungsbetriebsmodus,
wobei die Manipulation der Position und Lage des Werkzeugs (2n) durch den Werkzeugshandhaberoboter (2) mit der Manipulation der Position und Lage des Werkstücks (1m) durch den Werkstückhandhaberoboter (1) koordiniert ist und unabhängig von dieser ist, so daß die Relativposition und die Relativlage des Werkzeugs (2n) gegenüber dem Werkstück (1m) im wesentlichen konstant aufrechterhalten werden, zuführt,
eine Auswähleinrichtung (7) eines Handhaberoboters, die ein Robotersignal zuführt, um entweder den Werkstückhandhaberoboter (1) oder den Werkzeughandhaberoboter (2) auszuwählen, eine Lehrtasteneinrichtung (12), die Betätigungssignale zum Ändern der Position und der Lage des Werkstücks (1m) oder des Werkzeugs (2n) zuführt,
eine Steuerungseinrichtung (4A) zum Zusammenwirken von Lehroperationen, die das Robotersystem im Ansprechen auf die Betätigungssignale, das Robotersignal, das einen Werkstückhandhaberoboter (1) auswählt, und das Modussignal steuert,
wobei die Steuerungseinrichtung (4A) einen Computer aufweist, der die folgenden Schritte ausführt:
(i) Aufnahme der "Betätigungssignale", Errechnen einer "vorherigen Position und einer vorherigen Lage des Werkstücks (1m) in einem voreingestellten Koordinatensystem vor der Aufnahme der Betätigungssignale" im Ansprechen auf "vorherigen Gelenkvariablen des Werkstückhandhaberoboters (1)" und Errechnen "einer vorherigen Relativposition und einer vorherigen Relativlage des Werkzeugs (2n) gegenüber dem Werkstück (1m) vor der Aufnahme der Betätigungssignale" im Ansprechen auf "vorherige Gelenkvariablen des Werkstückhandhaberoboters (1)" und "vorherige Gelenkvariablen des Werkzeughandhaberoboters (2)",
(ii) Steuerung der Ausführung eines Berechnungsschritts im Ansprechen auf Betätigungssignale, die für einen voreingestellten Zeitintervall aufrechterhalten werden, Steuerung der Wiederholung des Errechnungsschritts im Ansprechen auf das Erfassen einer Änderung der Betätigungssignale im voreingestellten Zeitintervall oder Steuerung der Beendigung des manuellen Zusammenwirkungsbetriebsmodus im Ansprechen auf das Nichtvorliegen der Betätigungssignale im voreingestellten Zeitintervall,
(iii) Berechnen von "Position und Lage des Werkstücks (1m) nach einem voreingestellten Zeitintervall" im Ansprechen auf "die Betätigungssignale" und "die vorherige Position und die vorherige Lage des Werkstücks (1m) in einem voreingestellten Koordinatensystem vor der Aufnahme der Betätigungssignale", die durch den Errechnungsschritt berechnet wurden, und Berechnen von "Position und Lage des Werkzeugs (2n) nach einem voreingestellten Zeitintervall" im Ansprechen auf "die vorherige Relativposition und die vorherige Relativlage des Werkzeugs (2n) gegenüber dem Werkstück (1m) vor der Aufnahme der Betätigungssignale", die durch den Errechnungsschritt berechnet wurden, und die "Position und Lage des Werkstücks (1m) nach einem voreingestellten Zeitintervall",
(iv) Berechnen von "Gelenkvariablen des Werkstückhandhaberoboters (1) nach einem voreingestellten Zeitintervall" im Ansprechen auf "eine Position und eine Lage des Werkstücks (1m) nach einem voreingestellten Zeitintervall", die durch den Berechnungsschritt berechnet wurden, und Berechnen der "Gelenkvariablen des Werkzeughandhaberoboters (2) nach einem voreingestellten Zeitintervall" im Ansprechen auf die "Position und Lage des Werkzeugs (2n) nach einem voreingestellten Zeitintervall", die durch den Berechnungsschritt berechnet wurden, und
(v) Berechnen von "Betätigungswerten (a_{w1-i}, a_{w2-i}, ··· a_{w6-i}) für Betätigungseinrichtungen (17W) des Werkstückhandhaberoboters (1)" im Ansprechen auf die "Gelenkvariablen (Φ₁, Φ₂, ··· Φ₆) des Werkstückhandhaberoboters (1) nach einem voreingestellten Zeitintervall" und Berechnen der "Betätigungswerte (aₜ₁₋ᵢ, aₜ₂₋ᵢ, ··· aₜ₆₋ᵢ) für Betätigungseinrichtungen (17T) des Werkzeughandhaberoboters (2)" im Ansprechen auf die "Gelenkvariablen (Φ₁, Φ₂, ··· Φ₆) des Werkzeughandhaberoboters (2) nach einem voreingestellten Zeitintervall" und im Ansprechen darauf gleichzeitiges Anlegen von Steuersignalen der Betätigungswerte (a_{w1-i}, a_{w2-i}, ··· a_{w6-i}) an die Betätigungseinrichtungen (17W) des Werkstückhandhaberoboters (1) und von Steuersignalen der Betätigungswerte (aₜ₁₋ᵢ, aₜ₂₋ᵢ, ··· aₜ₆₋ᵢ) an die Betätigungseinrichtungen (17T) des Werkzeughandhaberoboters (2) und ferner das Erteilen des Befehls zur Wiederholung des Steuerungsschrittes.

2. Lehrsteuerungsvorrichtung für manuelle Operationen nach Anspruch 1, wobei
die Betätigungssignale Signale aufweisen, die den Befehl für die lineare Bewegung eines Werkstücks (1m) entlang jeder Achse und für die Drehung eines Werkstücks (1m) um jede Achse der kartesischen Koordinaten erteilen.

3. Lehrsteuerungsvorrichtung für manuelle Operationen nach Anspruch 1, wobei
die Betätigungssignale Signale aufweisen, die den Befehl für die Drehung der Gelenke (1a, 1b, 1c, 1d, 1e, 1f) des Werkstückhandhaberoboters (1) erteilen.

## Revendications

1. Dispositif de commande d'enseignement pour des opérations manuelles d'un système robotique industriel, le système robotique incluant un robot de manipulation de pièce (1), pour agir sur une position et une attitude d'une pièce à usiner (1m), et un robot de manipulation d'outil (2) pour agir sur une position et une attitude d'un outil (2n) de traitement de ladite pièce (1m), ledit dispositif de commande d'enseignement comprenant :
un sélecteur (9) d'action indépendante/coaction pour fournir un signal de mode afin de sélectionner (i) un mode manuel à action indépendante pour le fonctionnement dudit système robotique, dans lequel les actions sur la position et l'attitude de la pièce (1m) effectuées par le dit robot de manipulation de pièce (1) sont exécutées indépendamment des actions sur la position et l'attitude de l'outil (2n) effectuées par ledit robot de manipulation d'outil (2), et (ii) un mode manuel à coaction pour le fonctionnement dudit système, dans lequel les actions sur la position et l'attitude de l'outil (2n) effectuées par le dit robot de manipulation d'outil (2) sont coordonnées avec les actions, et indépendantes de celles-ci, sur la position et l'attitude de la pièce (1m) effectuées par ledit robot de manipulation de pièce (1) d'une manière telle que la position relative et l'attitude relative de l'outil (2n) par rapport à la pièce (1m) restent sensiblement constantes;
un sélecteur (7) d'un robot de manipulation, pour fournir un signal de robot de façon à sélectionner le robot de manipulation de pièce (1) ou le robot de manipulation d'outil (2) ;
un clavier d'enseignement (12) pour fournir des signaux de manoeuvre afin de changer la position et l'attitude de la dite pièce (1m) ou dudit outil (2m) ;
une unité de commande (4A) pour des opérations d'enseignement en coaction commandant ledit système robotique en réponse auxdits signaux de manoeuvre, audit signal de robot sélectionnant un robot de manipulation de pièce (1) et audit signal de mode ;
ladite unité de commande (4A) comprenant un ordinateur qui exécute les étapes suivantes :
(i) réception desdits "signaux de manoeuvre", recherche "d'une position précédente et d'une attitude précédente de la pièce (1m) dans un système de coordonnées prédéterminé avant la réception des signaux de manoeuvre" en réponse à des "variables d'articulation précédentes dudit robot de manipulation de pièce (1)",et recherche "d'une position relative précédente et d'une attitude relative précédente de l'outil (2n) par rapport à la pièce (1m) avant la réception des signaux de manoeuvre" en réponse à des "variables d'articulation précédentes dudit robot de manipulation de pièce (1)" et à des "variables d'articulation précédentes dudit robot de manipulation d'outil (2)" ;
(ii) commande de l'exécution d'une étape de calcul en réponse au maintien desdits signaux de manoeuvre pendant un intervalle de temps prédéterminé, commande de la répétition de ladite étape de rechercheen réponse à la détection d'un changement dans lesdits signaux de manoeuvre à l'intérieur dudit intervalle de temps prédéterminé, ou commande de la terminaison dudit mode de fonctionnement manuel en coaction en réponse à une absence desdits signaux de manoeuvre à l'intérieur dudit intervalle de temps prédéterminé ;
(iii) calcul "d'une position et d'une attitude de la pièce (1m) après un intervalle de temps prédéterminé" en réponse aux "dits signaux de manoeuvre" et aux "dite position précédente et dite attitude précédente de la pièce (1m) dans un système de coordonnées prédéterminé avant réception des signaux de manoeuvre" calculées par ladite étape de recherche, et calcul "d'une position et d'une attitude de l'outil (2n) après un intervalle de temps prédéterminé" en réponse aux "dite position relative précédente et dite attitude relative précédente de l'outil (2n) par rapport à la pièce (1m) avant la réception des signaux de manoeuvre" calculées par ladite étape de recherche et aux "dite position et dite attitude de la pièce (1m) après un intervalle de temps prédéterminé" ;
(iv) calcul des "variables d'articulation du robot de manipulation de pièce (1) après un intervalle de temps prédéterminé" en réponse a "une position et une attitude de la pièce (1m) après un intervalle de temps prédéterminé" calculées par ladite étape de calcul, et calcul des "variables d'articulation du robot de manipulation d'outil (2) après un intervalle de temps prédéterminé" en réponse a "une position et une attitude de l'outil (2n) après un intervalle de temps prédéterminé" calculées par ladite étape de calcul ; et
(v) calcul de "valeurs de manoeuvre (a_{w1-i},a_{w2-i}, ... a_{w6-i}) pour les actionneurs (17W) du robot de manipulatiopn de pièce (1)" en réponse aux "dites variables d'articulation (φ₁,φ₂, ...,φ₆) du robot de manipulation de pièce (1) après un intervalle de temps prédéterminé", et calcul de "valeurs de manoeuvre (aₜ₁₋ᵢ,aₜ₂₋ᵢ,.., aₜ₆₋ᵢ) pour les actionneurs (17T) du robot de manipulation d'outil (2)" en réponse aux "dites variables d'articulation (φ₁, φ₂, ..., φ₆) du robot de manipulation d'outil (2) après un intervalle de temps prédéterminé" et, en réponse, fourniture simultanée de signaux de commande ayant les valeurs de manoeuvre (a_{w1-i},a_{w2-i},...,a_{w6-i}) aux actionneurs (17W) du robot de manipulation de pièce (1) et de signaux de commande ayant les valeurs de manoeuvre (aₜ₁₋ᵢ,aₜ₂₋ᵢ,...,aₜ₆₋ᵢ) aux actionneurs (17T) du robot de manipulation d'outil (2), et, en outre, commande de la répétition de ladite étape de commande.

2. Dispositif de commande d'enseignement pour des opérations manuelles suivant la revendication 1, dans lequel :
lesdits signaux de manoeuvre comprennent des signaux commandant un mouvement linéaire d'une pièce (1m) le long de chaque axe et une révolution d'une pièce (1m) autour de chaque axe des coordonnées cartésiennes.

3. Dispositif de commande d'enseignement pour des opérations manuelles suivant la revendication 1, dans lequel :
lesdits signaux de manoeuvre comprennent des signaux commandant une rotation des articulations (1a,1b,1c, 1d,1e,1f) dudit robot de manipulation de pièce (1).
